(19) Europäisches Patentamt / European Patent Office / Office européen des brevets

(11) **EP 4 336 498 B1**

(12) # EUROPEAN PATENT SPECIFICATION

(45) Date of publication and mention of the grant of the patent:
**29.04.2026 Bulletin 2026/18**

(21) Application number: **22815004.1**

(22) Date of filing: **12.05.2022**

(51) International Patent Classification (IPC):
**G10L 19/032** (2013.01)    **G10L 19/038** (2013.01)
**G10L 25/30** (2013.01)    **G06N 3/04** (2023.01)
**G06N 3/08** (2023.01)

(52) Cooperative Patent Classification (CPC):
**G10L 19/00; G06N 3/04; G06N 3/045;**
**G06N 3/0455; G06N 3/0464; G06N 3/0495;**
**G06N 3/08; G10L 19/032;** G10L 19/008;
G10L 19/02; G10L 25/30

(86) International application number:
**PCT/CN2022/092543**

(87) International publication number:
**WO 2022/252957 (08.12.2022 Gazette 2022/49)**

(54) **AUDIO DATA ENCODING METHOD AND RELATED APPARATUS, AUDIO DATA DECODING METHOD AND RELATED APPARATUS, AND COMPUTER-READABLE STORAGE MEDIUM**

AUDIODATENCODIERUNGSVERFAHREN UND ZUGEHÖRIGE VORRICHTUNG, AUDIODATENDECODIERUNGSVERFAHREN UND ZUGEHÖRIGE VORRICHTUNG SOWIE COMPUTERLESBARES SPEICHERMEDIUM

PROCÉDÉ DE CODAGE DE DONNÉES AUDIO ET APPAREIL ASSOCIÉ, PROCÉDÉ DE DÉCODAGE DE DONNÉES AUDIO ET APPAREIL ASSOCIÉ, ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.05.2021 CN 202110596023**

(43) Date of publication of application:
**13.03.2024 Bulletin 2024/11**

(73) Proprietor: **Huawei Technologies Co., Ltd. Longgang**
**Shenzhen, Guangdong 518129 (CN)**

(72) Inventors:
• **XIA, Bingyin**
**Shenzhen, Guangdong 518129 (CN)**
• **LI, Jiawei**
**Shenzhen, Guangdong 518129 (CN)**
• **WANG, Zhe**
**Shenzhen, Guangdong 518129 (CN)**

(74) Representative: **Körber, Martin Hans**
**Mitscherlich PartmbB**
**Karlstraße 7**
**80333 München (DE)**

(56) References cited:
WO-A1-2015/175953    CN-A- 1 920 947
CN-A- 109 036 375    CN-A- 111 837 140
CN-A- 112 133 317    CN-A- 112 348 164
CN-A- 112 789 625    KR-A- 20200 039 530
US-A1- 2021 012 202

• CHRISTOPHER F BARNES ET AL: "Advances in Residual Vector Quantization: A Review", IEEE TRANSACTIONS ON IMAGE PROCESSING, IEEE, USA, vol. 5, no. 2, 1 February 1996 (1996-02-01), pages 226 - 262, XP011025938, ISSN: 1057-7149, DOI: 10.1109/83.480761

## Description

## TECHNICAL FIELD

This application relates to the field of audio technologies, and in particular, to an audio data encoding method, an audio data decoding method, a related communication apparatus, and a related computer-readable storage medium.

## BACKGROUND

At present, with progress of the society and continuous development of technologies, users have increasingly high demand for audio and video services. How to provide a high-quality service for the users with a limited encoding bit rate or how to provide a same-quality service for the users with a low encoding bit rate has been a focus of audio and video encoding and decoding research. Some international standard organizations (for example, the 3rd generation partner project (3rd Generation Partner Project, 3GPP)) also participate in the development of related standards to promote high-quality audio and video services.

Audio and video compression is an indispensable part of media applications such as media communication and media broadcast. With development of high-definition audio and video industries and 3D industries, people have increasingly high demand for audio and video quality, and an amount of audio and video data in the media applications increases rapidly.

In conventional audio and video compression technologies, original audio and video data is compressed based on a basic principle of signal processing by using correlation of signals in time and space, to reduce an amount of data and facilitate data transmission and storage.

With continuous development and maturity of artificial intelligence (Artificial intelligence, AI) technologies, a neural network technology is started to be applied to increasingly more fields to replace or combine a conventional technology, and great progress has been made. In recent years, researchers began to introduce the AI technologies to the audio and video encoding and decoding field.

WO 2015/175953 AI discloses an audio encoding device which performs closed loop quantization of an audio object based at least in part on a result of performing quantization of directional information associated with the audio object, and an audio decoding device which obtains an audio object that has been closed loop quantized based at least in part on a result of performing quantization of directional information associated with the audio object, and may dequantize the audio object.

## SUMMARY

Embodiments of this application provide an audio data encoding method, an audio data decoding method, a related communication apparatus, and a related computer-readable storage medium. The application is defined by the attached claims.

A first aspect of embodiments of this application provides an audio data encoding method. The method may include: obtaining, by an audio encoder, to-be-encoded audio data; processing the to-be-encoded audio data by using an encoding neural network, to generate a first latent variable; performing quantization processing on the first latent variable to obtain a second latent variable; obtaining a latent variable compensation parameter based on the first latent variable and the second latent variable; encoding the latent variable compensation parameter, and writing an encoding result of the latent variable compensation parameter into a bitstream; and encoding the second latent variable, and writing an encoding result of the second latent variable into the bitstream.

The audio data mentioned in this embodiment of this application may be, for example, an audio signal and/or an audio feature. The audio signal may be a time-domain audio signal. The audio signal may alternatively be a frequency-domain signal obtained by performing time-frequency transform on a time-domain signal. For example, the frequency-domain signal may be a frequency-domain signal obtained by performing modified discrete cosine transform (Modified Discrete Cosine Transform, MDCT) on a time-domain audio signal or a frequency-domain signal obtained by performing fast Fourier transform (Fast Fourier Transform, FFT) on a time-domain audio signal. Alternatively, the audio signal may be a signal obtained by filtering by a quadrature mirror filter (Quadrature Mirror Filter, QMF). Alternatively, the to-be-encoded audio signal may be a residual signal, for example, another encoded residual signal or a residual signal obtained by filtering by using linear predictive coding (linear predictive coding, LPC). The to-be-encoded audio feature may be a feature extracted based on an audio signal, for example, a Mel-frequency cepstral coefficient or a latent variable obtained by using a neural network.

The encoding neural network mentioned in this embodiment of this application may be a fully connected network (namely, a fully connected neural network), a convolutional neural network (Convolutional Neural Network, CNN), or another type of neural network.

The audio data processing solution in this embodiment of this application may be applied to an AI codec that includes or does not include a context model.

The encoding neural network may be pretrained. A specific network structure and a training method of the encoding neural network are not limited in this application. The processing the to-be-encoded audio data by using the encoding neural network may be directly using the to-be-encoded audio data as an input of the encoding neural network, or may be preprocessing the to-be-encoded audio data and then using preprocessed audio data as an input of the encoding neural network. The first latent variable may be an output of the encoding neural network, or may be obtained by post-processing an output of the encoding neural network.

It can be learned that, in the technical solution provided in this embodiment of this application, an encoder side may obtain a latent variable compensation parameter based on a quantization error of a latent variable (that is, the latent variable compensation parameter can indicate a related quantization error caused by quantizing the latent variable by the encoder side) and write an encoding result of the latent variable compensation parameter into a bitstream. Based on this, a decoder side can perform compensation processing on a related latent variable based on the latent variable compensation parameter. This helps reduce distortion of input data of a decoding neural network, thereby helping improve quality of a final decoded signal. Specifically, for example, this helps reduce a vacancy of decoding an audio signal in frequency domain, and improve subjective auditory quality of a decoded audio signal.

During actual application, there may be various manners of obtaining the latent variable compensation parameter based on the first latent variable and the second latent variable.

For example, the obtaining a latent variable compensation parameter based on the first latent variable and the second latent variable includes: determining an element that is in a third latent variable and that meets a preset condition, where the third latent variable is obtained by performing dequantization processing on the second latent variable; obtaining, based on the first latent variable and the third latent variable, a quantization error of the element that meets the preset condition; and obtaining the latent variable compensation parameter based on the quantization error.

For another example, the obtaining a latent variable compensation parameter based on the first latent variable and the second latent variable may include: determining an element that is in the second latent variable and that meets a preset condition; obtaining, based on the first latent variable and the second latent variable, a quantization error of the element that meets the preset condition; and obtaining the latent variable compensation parameter based on the quantization error.

Other implementations of obtaining the latent variable compensation parameter based on the first latent variable and the second latent variable are not described herein again.

Specific manners of obtaining the latent variable compensation parameter may vary based on different forms of a latent variable. A basic principle is to determine a value of the latent variable compensation parameter based on a quantization error of an element that is in the latent variable and that meets a preset condition. The latent variable compensation parameter may indicate the quantization error of the element that is in the latent variable and that meets the preset condition.

In a possible implementation, an average value of quantization errors of all elements that meet the condition is used as the value of the latent variable compensation parameter. In another possible implementation, a weighted average value of quantization errors of all elements that meet the condition is used as the value of the latent variable compensation parameter, and a value of the weighted value may be related to a sequence number of the element. The element that meets the preset condition may be an element that is in the second latent variable and that meets the preset condition. The element that is in the second latent variable and that meets the preset condition may be an element whose element value is a minimum quantized value, may be an element whose element value is an intermediate value of a quantization range, or may be an element whose element value is less than or equal to a preset threshold. When values of the quantization range include a positive number and a negative number, whether a quantized value is an intermediate value of a quantization range may be selected as a condition. For example, if a value of a quantized value ranges from -10 to 10, and an intermediate value of the quantization range is 0, a quantization error of an element whose quantized value is 0 may be selected to count an average value of quantization errors. The element that meets the preset condition may alternatively be an element that is in the third latent variable and that meets the preset condition. The third latent variable is obtained by performing dequantization processing on the second latent variable. Similarly, the element that is in the third latent variable and that meets the preset condition may be an element whose element value is equal to a minimum dequantized value, may be an element whose element value is equal to a preset value, or may be an element whose element value is less than or equal to a preset threshold.

The quantization error mentioned in embodiments of this application may be an amplitude difference or an energy difference between a to-be-quantized original value and a quantized value, an absolute value of the amplitude difference or energy difference, or the like, or may be an amplitude difference or an energy difference between a to-be-quantized original value and a dequantized value, an absolute value of the amplitude difference or energy difference, or the like.

For example, the encoding the latent variable compensation parameter and then writing an encoding result into the bitstream may include: performing scalar quantization or vector quantization on the latent variable compensation parameter, to obtain a quantization index of the latent variable compensation parameter, and encoding the quantization index of the latent variable compensation parameter and writing an encoded quantization index into the bitstream. Certainly, entropy coding may also be performed on a quantized latent variable compensation parameter, and then an entropy-coded quantized latent variable compensation parameter is written into the bitstream.

In some possible implementations, the encoding the second latent variable and then writing an encoding result into the bitstream may include: performing arithmetic coding on the second latent variable by using a scalable entropy coding model, and writing an arithmetic coding result of the second latent variable into the bitstream; or performing arithmetic coding on the second latent variable by using an entropy coding model with a preset probability distribution, and writing an arithmetic coding result of the second latent variable into the bitstream.

It may be understood that the foregoing preset condition may be various, and a preset condition that meets a requirement may be set based on a requirement of a specific scene.

For example, the third latent variable or the second latent variable includes a first element. The meeting a preset condition may include: a value of the first element is less than or equal to a preset value. The value of the first element is a quantized value when the first element is an element in the second latent variable. Alternatively, the value of the first element is a dequantized value when the first element is an element in the third latent variable.

In some possible implementations, the obtaining, based on the first latent variable and the second latent variable, a quantization error of the element that meets the preset condition may include: determining a quantization error of a first element based on a first value of the first element in the first latent variable and a second value of the first element in the second latent variable. Herein, the quantization error of the first element may be, for example, a difference between the first value and the second value, an absolute value of the difference, or the like.

In some possible implementations, the obtaining, based on the first latent variable and the third latent variable, a quantization error of the element that meets the preset condition includes: determining a quantization error of a first element based on a first value of the first element in the first latent variable and a third value of the first element in the third latent variable. Herein, the quantization error of the first element may be, for example, a difference between the first value and the third value, an absolute value of the difference, or the like.

It may be understood that forms of a latent variable output by encoding neural networks of different structures may be different.

In the solution of this embodiment of this application, the encoding neural network may be specifically a fully connected neural network, a convolutional neural network, or another neural network. When the encoding neural network is a convolutional neural network, a quantity of channels of the convolutional neural network may be one, two, three, four, or more.

For example, when the encoding neural network is a convolutional neural network, the convolutional neural network includes only one channel. The latent variable compensation parameter may be a scalar. The scalar indicates quantization errors of all elements that are in the second latent variable and that meet the preset condition, or the scalar indicates quantization errors of all elements that are in the third latent variable and that meet the preset condition.

For another example, when the encoding neural network is a convolutional neural network, the convolutional neural network includes at least two channels, the second latent variable corresponds to the at least two channels, the at least two channels include a first channel, and the second latent variable is an $m \times n$ matrix.

The latent variable compensation parameter may be a scalar. The scalar indicates quantization errors of all elements that are in the second latent variable and that meet the preset condition.

Alternatively, the latent variable compensation parameter is a vector. A quantity of dimensions of the vector is equal to a quantity of channels of the convolutional neural network, vector elements in the vector one-to-one correspond to the at least two channels, a first vector element in the vector elements corresponds to the first channel, the first vector element indicates quantization errors of all elements that are in a submatrix of the $m \times n$ matrix and that meet the preset condition, and the first channel corresponds to the submatrix. A quantity of elements of the submatrix is less than $m \times n$. m and n are positive integers.

For another example, when the encoding neural network is a convolutional neural network, the convolutional neural network includes at least three channels, and the second latent variable corresponds to the at least three channels. For example, the second latent variable is an $m \times n$ matrix.

The latent variable compensation parameter is a vector. A quantity of dimensions of the vector is less than a quantity of channels of the convolutional neural network, a first vector element in the vector corresponds to at least two of the at least three channels, and the at least two channels include a second channel and a first channel. The first vector element indicates quantization errors of all elements that are in a first submatrix of the $m \times n$ matrix and that meet the preset condition, and the first vector element further indicates quantization errors of all elements that are in a second submatrix of the $m \times n$ matrix and that meet the preset condition. The first submatrix corresponds to the first channel, the second submatrix corresponds to the second channel, a quantity of elements of the first submatrix is less than $m \times n$, and a quantity of elements of the second submatrix is less than $m \times n$.

For another example, when the encoding neural network is a convolutional neural network, the convolutional neural network includes at least two channels, the third latent variable corresponds to the at least two channels, the at least two channels include a first channel, and the third latent variable is an $m \times n$ matrix. m and n are positive integers.

The latent variable compensation parameter is a scalar. The scalar indicates quantization errors of all elements that are in the third latent variable and that meet the preset condition.

Alternatively, the latent variable compensation parameter is a vector. A quantity of dimensions of the vector is equal to a quantity of channels of the convolutional neural network, vector elements in the vector one-to-one correspond to the at least two channels, a first vector element in the vector elements corresponds to the first channel, the first vector element indicates quantization errors of all elements that are in a submatrix of the $m \times n$ matrix and that meet the preset condition, and the first channel corresponds to the submatrix. A quantity of elements of the submatrix is less than $m \times n$. $m$ and $n$ are positive integers.

For another example, when the encoding neural network is a convolutional neural network, the convolutional neural network includes at least three channels, the third latent variable corresponds to the at least three channels, and the third latent variable is an $m \times n$ matrix.

The latent variable compensation parameter is a vector. A quantity of dimensions of the vector is less than a quantity of channels of the convolutional neural network, a first vector element in the vector corresponds to at least two of the at least three channels, and the at least two channels include a second channel and a first channel. The first vector element indicates quantization errors of all elements that are in a first submatrix of the $m \times n$ matrix and that meet the preset condition, and the first vector element further indicates quantization errors of all elements that are in a second submatrix of the $m \times n$ matrix and that meet the preset condition. The first submatrix corresponds to the first channel, the second submatrix corresponds to the second channel, a quantity of elements of the first submatrix is less than $m \times n$, and a quantity of elements of the second submatrix is less than $m \times n$.

For another example, when the encoding neural network is a convolutional neural network, the convolutional neural network includes at least two channels, and the second latent variable corresponds to a first channel in the at least two channels.

The latent variable compensation parameter is a scalar. The scalar indicates quantization errors of all elements that are in at least two latent variables corresponding to the at least two channels and that meet the preset condition, and the at least two latent variables include the second latent variable.

Alternatively, the latent variable compensation parameter is a vector. A quantity of dimensions of the vector may be equal to a quantity of channels of the convolutional neural network, vector elements in the vector one-to-one correspond to the at least two channels, the vector elements include a first vector element corresponding to the first channel, and the first vector element indicates quantization errors of all elements that are in the second latent variable and that meet the preset condition.

For another example, when the encoding neural network is a convolutional neural network, the convolutional neural network includes at least three channels, and the second latent variable corresponds to a first channel in the at least three channels.

The latent variable compensation parameter is a vector. A quantity of dimensions of the vector is less than a quantity of channels of the convolutional neural network. A first vector element in the vector corresponds to at least two of the at least three channels, and the at least two channels include a second channel and the first channel. The first vector element indicates quantization errors of all elements that are in the second latent variable and that meet the preset condition, and the first vector element further indicates quantization errors of all elements that are in another latent variable corresponding to the second channel and that meet the preset condition.

For another example, when the encoding neural network is a convolutional neural network, the convolutional neural network includes at least two channels, and the third latent variable corresponds to a first channel in the at least two channels.

The latent variable compensation parameter is a scalar. The scalar indicates quantization errors of all elements that are in at least two latent variables corresponding to the at least two channels and that meet the preset condition, and the at least two latent variables include the third latent variable.

Alternatively, the latent variable compensation parameter is a vector. A quantity of dimensions of the vector is equal to a quantity of channels of the convolutional neural network, vector elements in the vector one-to-one correspond to the at least two channels, and a vector element corresponding to the first channel indicates quantization errors of all elements that are in the third latent variable and that meet the preset condition.

For another example, when the encoding neural network is a convolutional neural network, the convolutional neural network includes at least three channels, and the third latent variable corresponds to a first channel in the at least three channels.

The latent variable compensation parameter is a vector. A quantity of dimensions of the vector is less than a quantity of channels of the convolutional neural network. A first vector element in the vector corresponds to at least two of the at least three channels, and the at least two channels include a second channel and the first channel. The first vector element indicates quantization errors of all elements that are in the third latent variable and that meet the preset condition, and the first vector element further indicates quantization errors of all elements that are in another latent variable corresponding to the second channel and that meet the preset condition.

In some possible implementations, when there are correspondences between the first vector element and the first channel and the second channel, the correspondences between the first vector element and the first channel and the second channel may be written into the bitstream. Certainly, if the encoder side and the decoder side use a same correspondence between an element and a channel by default, the correspondences between the first vector element and the first channel and the second channel may not be written into the bitstream.

It may be understood that the foregoing plurality of examples of manners of obtaining the latent variable compensation parameter corresponding to the convolutional neural network or the fully connected network help meet flexible requirements of a plurality of application scenes, and further help improve a scene adaptability capability of the solution.

A second aspect of embodiments of this application provides an audio data decoding method. The method may include: obtaining a latent variable compensation parameter and a third latent variable (a value of a current element in the third latent variable may be a dequantized value) based on a bitstream, and performing compensation processing on the third latent variable based on the latent variable compensation parameter, to obtain a reconstructed first latent variable; and processing the reconstructed first latent variable by using a decoding neural network, to generate decoded audio data.

The obtaining a latent variable compensation parameter and a third latent variable based on a bitstream may include: decoding the bitstream to obtain the latent variable compensation parameter and a second latent variable, where a value of a current element in the second latent variable is a quantized value; and performing dequantization processing on the second latent variable to obtain the third latent variable. Alternatively, a specific decoder may be configured to directly decode the bitstream to obtain the third latent variable (in this case, there is no need to perform the steps of decoding the bitstream to obtain the second latent variable and performing dequantization processing on the second latent variable to obtain the third latent variable).

It can be learned that, in the solution provided in this embodiment of this application, an encoder side writes the latent variable compensation parameter into the bitstream, and the latent variable compensation parameter can indicate a related quantization error caused by quantizing a latent variable by the encoder side. Therefore, after obtaining the bitstream, a decoder side may perform compensation processing on the latent variable based on the latent variable compensation parameter. This helps reduce distortion of input data of the decoding neural network, thereby helping improve quality of a final decoded signal. Specifically, for example, this helps reduce a vacancy of decoding an audio signal in frequency domain, and improve subjective auditory quality of a decoded audio signal.

For example, the performing compensation processing on the third latent variable based on the latent variable compensation parameter, to obtain a reconstructed first latent variable may include: determining, based on the second latent variable or the third latent variable, an element that is in the third latent variable and that meets a preset condition; and performing, based on the latent variable compensation parameter, compensation processing on the element that is in the third latent variable and that meets the preset condition, to obtain the reconstructed first latent variable.

During actual application, there may be various manners of performing, based on the latent variable compensation parameter, compensation processing on the element that is in the third latent variable and that meets the preset condition, to obtain the reconstructed first latent variable. For example, the performing, based on the latent variable compensation parameter, compensation processing on the element that is in the third latent variable and that meets the preset condition, to obtain the reconstructed first latent variable may include: generating random noise; performing amplitude or energy adjustment on the generated random noise based on the latent variable compensation parameter, to obtain amplitude-adjusted or energy-adjusted random noise; and performing, based on the amplitude-adjusted or energy-adjusted random noise, compensation processing on the element that is in the third latent variable and that meets the preset condition, to obtain the reconstructed first latent variable.

It may be understood that the foregoing preset condition may be various, and a preset condition that meets a requirement may be set based on a requirement of a specific scene.

For example, the third latent variable or the second latent variable includes a first element. The meeting a preset condition may include: a value of the first element is less than or equal to a preset value. The value of the first element is a quantized value when the first element is an element in the second latent variable. Alternatively, the value of the first element is a dequantized value when the first element is an element in the third latent variable.

It may be understood that forms of a latent variable processed by using decoding neural networks of different structures may be different.

In the solution of this embodiment of this application, the decoding neural network may be specifically a fully connected neural network, a convolutional neural network, or another neural network. When the decoding neural network is a convolutional neural network, a quantity of channels of the convolutional neural network may be one, two, three, four, or more.

For example, when the decoding neural network is a convolutional neural network, the convolutional neural network includes only one channel. The latent variable compensation parameter is a scalar. The scalar is used to compensate for all elements that are in the third latent variable and that meet the preset condition.

For another example, when the decoding neural network is a convolutional neural network, the convolutional neural network includes at least two channels, the third latent variable corresponds to the at least two channels, the at least two channels include a first channel, and the third latent variable is an m×n matrix. m and n are positive integers.

The latent variable compensation parameter may be a scalar. The scalar is used to compensate for all elements that are in the third latent variable and that meet the preset condition.

Alternatively, the latent variable compensation parameter may be a vector. A quantity of dimensions of the vector is equal to a quantity of channels of the convolutional neural network, vector elements in the vector one-to-one correspond to the at least two channels, a first vector element in the vector elements corresponds to the first channel, the first vector element is used to compensate for all elements that are in a submatrix of the m×n matrix and that meet the preset condition, and the first channel corresponds to the submatrix. A quantity of elements of the submatrix is less than m×n. m and n are positive integers, a quantity of elements of the first submatrix is less than m×n, and a quantity of elements of the second submatrix is less than m×n.

For another example, when the decoding neural network is a convolutional neural network, the convolutional neural network includes at least three channels, the third latent variable corresponds to the at least three channels, and the third latent variable is an m×n matrix. The latent variable compensation parameter is a vector. A quantity of dimensions of the vector is less than a quantity of channels of the convolutional neural network, a first vector element in the vector corresponds to at least two of the at least three channels, and the at least two channels include a second channel and a first channel. The first vector element is used to compensate for all elements that are in a first submatrix of the m×n matrix and that meet the preset condition, and the first vector element is further used to compensate for all elements that are in a second submatrix of the m×n matrix and that meet the preset condition. The first submatrix corresponds to the first channel, the second submatrix corresponds to the second channel, a quantity of elements of the first submatrix is less than m×n, and a quantity of elements of the second submatrix is less than m×n. m and n are positive integers.

For another example, when the decoding neural network is a convolutional neural network, the convolutional neural network includes at least two channels, and the third latent variable corresponds to a first channel in the at least two channels.

The latent variable compensation parameter is a scalar. The scalar is used to compensate for all elements that are in at least two latent variables corresponding to the at least two channels and that meet the preset condition, and the at least two latent variables include the third latent variable.

Alternatively, the latent variable compensation parameter is a vector. A quantity of dimensions of the vector is equal to a quantity of channels of the convolutional neural network, vector elements in the vector one-to-one correspond to the at least two channels, and a vector element corresponding to the first channel in the vector is used to compensate for all elements that are in the third latent variable and that meet the preset condition.

For another example, when the decoding neural network is a convolutional neural network, the convolutional neural network includes at least three channels, and the third latent variable corresponds to a first channel in the at least three channels. The latent variable compensation parameter is a vector. A quantity of dimensions of the vector is less than a quantity of channels of the convolutional neural network, a first vector element in the vector corresponds to at least two of the at least three channels, and the at least two channels include a second channel and the first channel. The first vector element is used to compensate for all elements that are in the third latent variable and that meet the preset condition, and the first vector element is further used to compensate for all elements that are in another latent variable corresponding to the second channel and that meet the preset condition.

A third aspect of embodiments of this application further provides an audio encoder. The audio encoder may include several functional units, and the several functional units cooperate to implement any audio data encoding method provided in the first aspect.

Specifically, for example, the audio encoder may include an obtaining unit, a parameter processing unit, and an encoding unit.

The obtaining unit is configured to obtain to-be-encoded audio data.

The parameter processing unit is configured to: process the to-be-encoded audio data by using an encoding neural network, to generate a first latent variable; perform quantization processing on the first latent variable to obtain a second latent variable; and obtain a latent variable compensation parameter based on the first latent variable and the second latent variable.

The encoding unit is configured to: encode the latent variable compensation parameter, and write an encoding result of the latent variable compensation parameter into a bitstream; and encode the second latent variable, and write an encoding result of the second latent variable into the bitstream.

A fourth aspect of embodiments of this application further provides an audio decoder. The audio decoder may include several functional units, and the several functional units cooperate to implement any audio data decoding method provided in the second aspect.

Specifically, for example, the audio decoder may include a decoding unit and a parameter processing unit.

The parameter processing unit is configured to: obtain a latent variable compensation parameter and a third latent variable (a value of a current element in the third latent variable may be a dequantized value) based on

on a bitstream, and perform compensation processing on the third latent variable based on the latent variable compensation parameter, to obtain a reconstructed first latent variable.

The decoding unit is configured to process the reconstructed first latent variable by using a decoding neural network, to generate decoded audio data.

The obtaining a latent variable compensation parameter and a third latent variable based on a bitstream may include: decoding the bitstream to obtain the latent variable compensation parameter and a second latent variable, where a value of a current element in the second latent variable is a quantized value; and performing dequantization processing on the second latent variable to obtain the third latent variable. Alternatively, a specific decoder may be configured to directly decode the bitstream to obtain the third latent variable (in this case, there is no need to perform the steps of decoding the bitstream to obtain the second latent variable and performing dequantization processing on the second latent variable to obtain the third latent variable).

A fifth aspect of embodiments of this application provides an audio encoder. The audio encoder may include a processor, where the processor is coupled to a memory, the memory stores a program, and when program instructions stored in the memory are executed by the processor, any method provided in the first aspect is implemented.

A sixth aspect of embodiments of this application provides an audio decoder. The audio decoder may include a processor, where the processor is coupled to a memory, the memory stores a program, and when program instructions stored in the memory are executed by the processor, any method provided in the second aspect is implemented.

A seventh aspect of embodiments of this application provides a communication system, including an audio encoder and an audio decoder. The audio encoder is any audio encoder provided in embodiments of this application. The audio decoder is any audio decoder provided in embodiments of this application.

An eighth aspect of embodiments of this application provides a computer-readable storage medium, storing a program. When the program is run on a computer, the computer is enabled to perform some or all steps of any method provided in the first aspect.

A ninth aspect of embodiments of this application provides a computer-readable storage medium, storing a program. When the program is run on a computer, the computer is enabled to perform some or all steps of any method provided in the second aspect.

A tenth aspect of embodiments of this application provides a computer-readable storage medium, storing a bitstream. The bitstream is obtained based on any audio data encoding method provided in the first aspect.

An eleventh aspect of embodiments of this application provides a network device, including a processor and a memory. The processor is coupled to the memory, and is configured to read and execute a program stored in the memory, to implement some or all steps of any method provided in the first aspect or the second aspect.

The network device may be, for example, a chip or a system-on-a-chip.

A twelfth aspect of embodiments of this application provides a computer program product. The computer program product includes a computer program, and when the computer program is run on a computer, the computer is enabled to perform some or all steps of any method provided in the first aspect or the second aspect.

**BRIEF DESCRIPTION OF DRAWINGS**

The following briefly describes the accompanying drawings involved in the description of embodiments or the conventional technology.

FIG. 1A and FIG. 1B are schematic diagrams of scenes in which an audio encoding and decoding solution is applied to an audio terminal according to an embodiment of this application;

FIG. 1C and FIG. 1D are schematic diagrams of audio encoding and decoding processing performed by a network device in a wired or wireless network according to an embodiment of this application;

FIG. 1E is a schematic diagram of audio encoding and decoding in audio communication according to an embodiment of this application;

FIG. 1F is a schematic diagram of a system architecture applied to a radio and television field according to an embodiment of this application;

FIG. 2 is a schematic flowchart of an audio data encoding method according to an embodiment of this application;

FIG. 3 is a schematic flowchart of an audio data decoding method according to an embodiment of this application;

FIG. 4A is a schematic flowchart of another audio data encoding method according to an embodiment of this application;

FIG. 4B is a schematic diagram of a latent variable according to an embodiment of this application;

FIG. 5 is a schematic flowchart of another audio data decoding method according to an embodiment of this application;

FIG. 6A is a schematic flowchart of another audio data encoding method according to an embodiment of this application;

FIG. 6B is a schematic diagram of another latent variable according to an embodiment of this application;

FIG. 7 is a schematic flowchart of another audio data decoding method according to an embodiment of this application;

FIG. 8A and FIG. 8B are schematic flowcharts of another audio data encoding method according to an embodiment of this application;

FIG. 9A and FIG. 9B are schematic flowcharts of another audio data decoding method according to an embodiment of this application;

FIG. 10A and FIG. 10B are schematic flowcharts of another audio data encoding method according to an embodiment of this application;

FIG. 11A and FIG. 11B are schematic flowcharts of another audio data decoding method according to an embodiment of this application;

FIG. 12A and FIG. 12B are schematic flowcharts of another audio data encoding method according to an embodiment of this application;

FIG. 13A and FIG. 13B are schematic flowcharts of another audio data decoding method according to an embodiment of this application;

FIG. 14A and FIG. 14B are schematic diagrams of comparison of a latent variable before and after quantization according to an embodiment of this application;

FIG. 15 is a schematic diagram of an audio encoder according to an embodiment of this application;

FIG. 16 is a schematic diagram of an audio decoder according to an embodiment of this application;

FIG. 17 is a schematic diagram of another audio encoder according to an embodiment of this application;

FIG. 18 is a schematic diagram of another audio decoder according to an embodiment of this application;

FIG. 19 is a schematic diagram of a communication system according to an embodiment of this application; and

FIG. 20 is a schematic diagram of a network device according to an embodiment of this application.

## DESCRIPTION OF EMBODIMENTS

The following describes the technical solutions in embodiments of this application with reference to the accompanying drawings in embodiments of this application.

In the specification, claims, and accompanying drawings of this application, the terms such as "first" and "second" are intended to distinguish between different objects, but are not intended to describe a specific order.

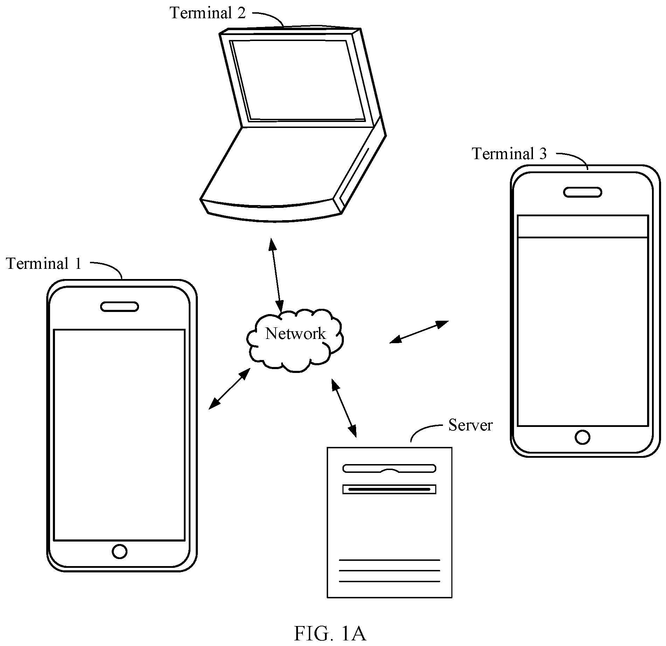

As shown in FIG. 1A to FIG. 1F, the following describes a network architecture to which an audio encoding and decoding solution of this application may be applied. The audio encoding and decoding solution may be applied to an audio terminal (for example, a wired or wireless communication terminal), or may be applied to a network device in a wired or wireless network.

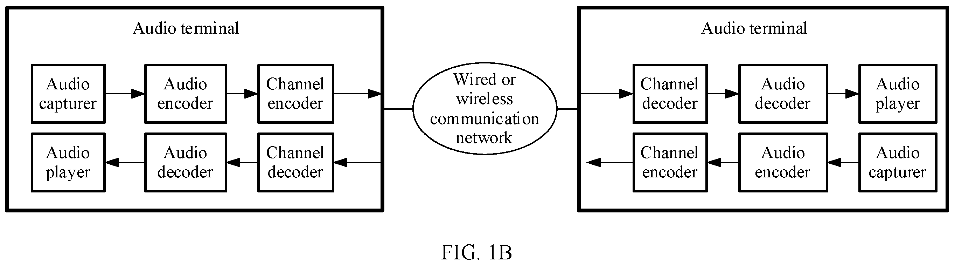

FIG. 1A and FIG. 1B show scenes in which the audio encoding and decoding solution is applied to an audio terminal. A specific product form of the audio terminal may be a terminal 1, a terminal 2, or a terminal 3 in FIG. 1A, but is not limited thereto. For example, in audio communication, an audio capturer in a sending terminal may capture an audio signal, an audio encoder may encode the audio signal captured by the audio capturer, a channel encoder performs channel encoding on an audio encoded signal obtained through encoding by the audio encoder, to obtain a bitstream, and the bitstream is transmitted over a wired or wireless network. Correspondingly, a channel decoder in a receiving terminal performs channel decoding on the received bitstream, and then an audio decoder obtains the audio signal through decoding. Then, an audio player may play audio.

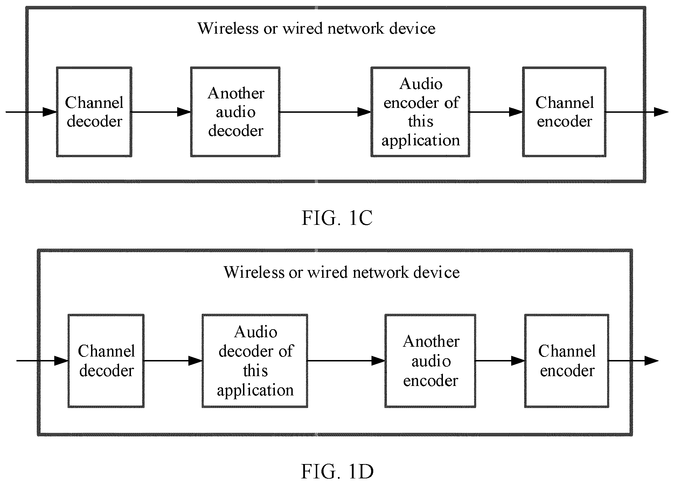

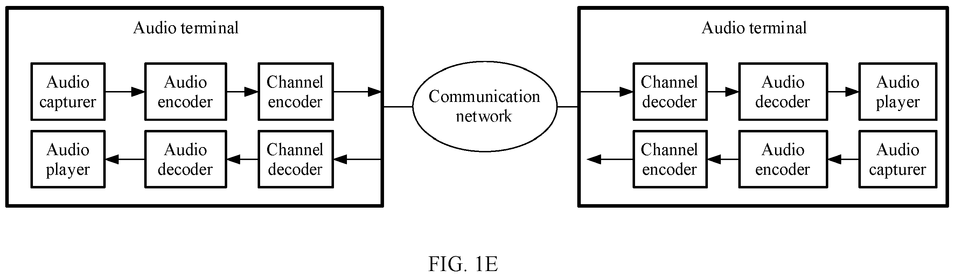

As shown in FIG. 1C, FIG. 1D, and FIG. 1E, if a network device in a wired or wireless network needs to implement transcoding, the network device may perform corresponding audio encoding and decoding processing.

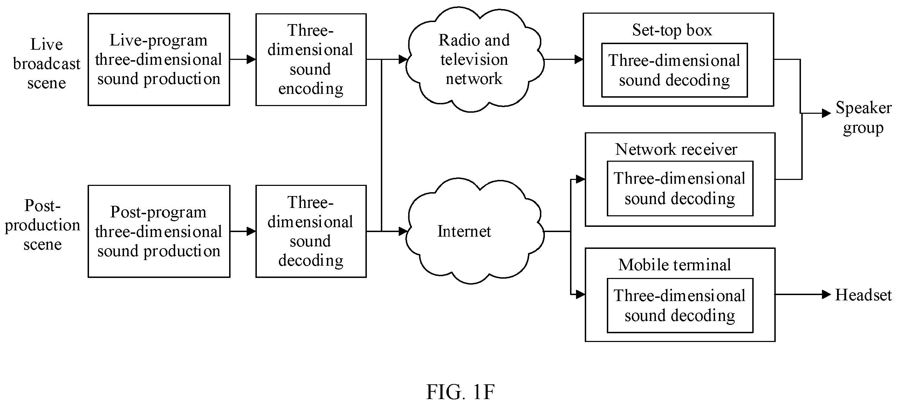

As shown in FIG. 1F, the audio encoding and decoding solution of this application may be further applied to a radio and television field. A system architecture applied to the radio and television field may be shown as an example in FIG. 1F. In a live broadcast scene, a three-dimensional sound signal is obtained through live-program three-dimensional sound production. The three-dimensional sound signal is encoded based on three-dimensional sound encoding in the solution of this application, to obtain a bitstream. The bitstream is transmitted to a user side over a radio and television network. A three-dimensional sound decoder in a set-top box decodes the bitstream to reconstruct the three-dimensional sound signal. A speaker group plays back a reconstructed three-dimensional sound signal. In a post-production scene, a three-dimensional sound signal is obtained through post-program three-dimensional sound production. The three-dimensional sound signal is encoded based on three-dimensional sound encoding in the solution of this application, to obtain a bitstream. The bitstream is transmitted to a user side over a radio and television network or an internet. A three-dimensional sound decoder in a network receiver or mobile terminal decodes the bitstream to reconstruct the three-dimensional sound signal. A speaker group or headset plays back a reconstructed three-dimensional sound signal.

In addition, the audio encoding and decoding solution of this application may be further applied to an audio encoding/audio decoding (Audio Encoding/Audio Decoding) module in a virtual reality streaming (VR streaming) service.

For example, an end-to-end procedure of processing an audio signal may be as follows: performing a preprocessing operation (Audio Preprocessing) after a capturing (Acquisition) module obtains an audio signal A, where the preprocessing operation includes filtering out a low-frequency part from a signal, and extracting orientation information from the signal by usually using 20 Hz or 50 Hz as a demarcation point; then performing encoding processing (Audio encoding) and encapsulation (File/Segment encapsulation); and then delivering (Delivery) a bitstream to a decoder side. Correspondingly, the decoder side first performs decapsulation (File/Segment decapsulation), then performs decoding (Audio decoding), performs binaural rendering (Audio rendering) processing on a decoded signal, and maps a signal obtained through the rendering processing to a headset (headphones) of a listener. The headset may be an independent headset, or may be a headset on a glasses device such as an HTC VIVE.

Specifically, an actual product to which the audio encoding and decoding solution of this application may be applied may include a radio access network device, a media gateway of a core network, a transcoding device, a media resource server, a mobile terminal, a fixed network terminal, and the like. The audio encoding and decoding solution of this application may be further applied to an audio codec in the VR streaming service.

The following describes some audio data encoding and decoding solutions in detail.

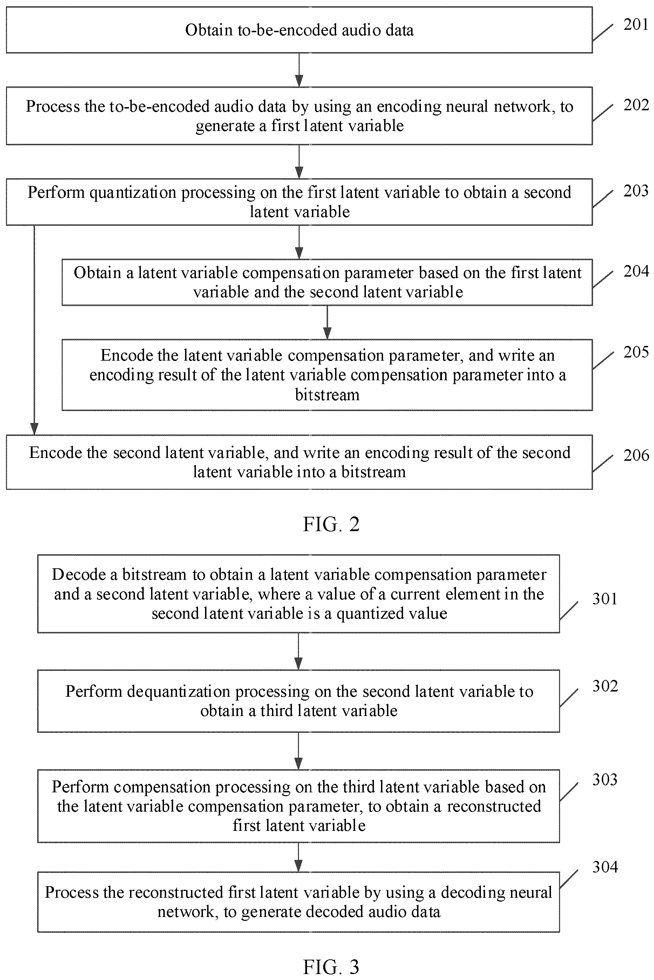

FIG. 2 is a schematic flowchart of an audio data encoding method according to an embodiment of this application. The audio data encoding method (corresponding to an encoder side) may include the following steps.

201: Obtain to-be-encoded audio data.

The audio data mentioned in this embodiment of this application may be, for example, an audio signal and/or an audio feature.

The to-be-encoded audio signal may be a time-domain audio signal. The to-be-encoded audio signal may alternatively be a frequency-domain signal obtained by performing time-frequency transform on a time-domain signal. For example, the frequency-domain signal may be a frequency-domain signal obtained by performing MDCT on a time-domain audio signal or a frequency-domain signal obtained by performing FFT on a time-domain audio signal. Alternatively, the to-be-encoded signal may be a signal obtained by filtering by a QMF. Alternatively, the to-be-encoded signal may be a residual signal, for example, another encoded residual signal or a residual signal obtained by filtering by using LPC. The to-be-encoded audio feature may be a feature extracted based on an audio signal, for example, a Mel-frequency cepstral coefficient or a latent variable obtained by using a neural network.

202: Process the to-be-encoded audio data by using an encoding neural network, to generate a first latent variable.

The encoding neural network may be pre-trained. A specific network structure and a training method of the encoding neural network are not limited in this application. The processing the to-be-encoded audio data by using the encoding neural network may be directly using the to-be-encoded audio data as an input of the encoding neural network, or may be preprocessing the to-be-encoded audio data and then using preprocessed audio data as an input of the encoding neural network. The first latent variable may be an output of the encoding neural network, or may be obtained by post-processing an output of the encoding neural network.

203: Perform quantization processing on the first latent variable to obtain a second latent variable.

204: Obtain a latent variable compensation parameter based on the first latent variable and the second latent variable.

During actual application, there may be various manners of obtaining the latent variable compensation parameter based on the first latent variable and the second latent variable.

For example, the obtaining a latent variable compensation parameter based on the first latent variable and the second latent variable includes: determining an element that is in a third latent variable and that meets a preset condition, where the third latent variable is obtained by performing dequantization processing on the second latent variable; obtaining, based on the first latent variable and the third latent variable, a quantization error of the element that meets the preset condition; and obtaining the latent variable compensation parameter based on the quantization error.

For another example, the obtaining a latent variable compensation parameter based on the first latent variable and the second latent variable may include: determining an element that is in the second latent variable and that meets a preset condition; obtaining, based on the first latent variable and a third latent variable, a quantization error of the element that meets the preset condition, where the third latent variable is obtained by performing dequantization processing on the second latent variable; and obtaining the latent variable compensation parameter based on the quantization error.

For another example, the obtaining a latent variable compensation parameter based on the first latent variable and the second latent variable may include: determining an element that is in the second latent variable and that meets a preset condition; obtaining, based on the first latent variable and the second latent variable, a quantization error of the element that meets the preset condition; and obtaining the latent variable compensation parameter based on the quantization error.

Other implementations of obtaining the latent variable compensation parameter based on the first latent variable and the second latent variable are not described herein again.

205: Encode the latent variable compensation parameter, and write an encoding result of the latent variable compensation parameter into a bitstream.

For example, the encoding the latent variable compensation parameter and then writing an encoding result into the bitstream may include: performing scalar quantization or vector quantization on the latent variable compensation parameter, to obtain a quantization index of the latent variable compensation parameter, and encoding the quantization index of the latent variable compensation parameter and writing an encoded quantization index into the bitstream. Certainly, the latent variable compensation parameter may alternatively be quantized, entropy coding may be performed on a quantization result, and an encoding result is written into the bitstream.

206: Encode the second latent variable, and write an encoding result of the second latent variable into a bitstream.

For example, the encoding the second latent variable and then writing the encoding result into the bitstream may include: performing arithmetic coding on the second latent variable by using a scalable entropy coding model, and then writing an arithmetic coding result into the bitstream; or performing arithmetic coding on the second latent variable by using an entropy coding model with a preset probability distribution, and then writing an arithmetic coding result into the bitstream.

It may be understood that there is no necessary sequence between the step 206 and the steps 204 and 205. The step 206 may be performed before the steps 204 and 205, may be performed later than the steps 204 and 205, or may be performed in parallel with the steps 204 and 205.

The foregoing audio data processing manner may be applied to an AI codec that includes or does not include a context model.

It may be understood that the foregoing preset condition may be various, and a preset condition that meets a requirement may be set based on a requirement of a specific scene.

For example, the third latent variable or the second latent variable includes a first element. The meeting a preset condition may include: a value of the first element is less than or equal to a preset value. The value of the first element is a quantized value when the first element is an element in the second latent variable. Alternatively, the value of the first element is a dequantized value when the first element is an element in the third latent variable.

In some possible implementations, the obtaining, based on the first latent variable and the second latent variable, a quantization error of the element that meets the condition may include: determining a quantization error of a first element based on a first value of the first element in the first latent variable and a second value of the first element in the second latent variable. Herein, the quantization error of the first element may be, for example, a difference between the first value and the second value, an absolute value of the difference, or the like.

In some possible implementations, the obtaining, based on the first latent variable and the third latent variable, a quantization error of the element that meets the preset condition includes: determining a quantization error of a first element based on a first value of the first element in the first latent variable and a third value of the first element in the third latent variable. Herein, the quantization error of the first element may be, for example, a difference between the first value and the third value, an absolute value of the difference, or the like.

It may be understood that forms of a latent variable output by encoding neural networks of different structures may be different.

In the solution of this embodiment of this application, the encoding neural network may be specifically a fully connected neural network, a convolutional neural network, or another neural network. When the encoding neural network is a convolutional neural network, a quantity of channels of the convolutional neural network may be one, two, three, four, or more.

For example, when the encoding neural network is a convolutional neural network, the convolutional neural network includes only one channel. The latent variable compensation parameter may be a scalar. The scalar indicates quantization errors of all elements that are in the second latent variable and meet the preset condition, or the scalar indicates quantization errors of all elements that are in the third latent variable and meet the preset condition.

For another example, when the encoding neural network is a convolutional neural network, the convolutional neural network includes at least two channels, the second latent variable corresponds to the at least two channels, the at least two channels include a first channel, and the second latent variable is an $m \times n$ matrix.

The latent variable compensation parameter may be a scalar. The scalar indicates quantization errors of all elements that are in the second latent variable and that meet the preset condition.

Alternatively, the latent variable compensation parameter is a vector. A quantity of dimensions of the vector is equal to a quantity of channels of the convolutional neural network, vector elements in the vector one-to-one correspond to the at least two channels, a first vector element in the vector elements corresponds to the first channel, the first vector element indicates quantization errors of all elements that are in a submatrix of the $m \times n$ matrix and that meet the preset condition, and the first channel corresponds to the submatrix. A quantity of elements of the submatrix is less than $m \times n$.

For another example, when the encoding neural network is a convolutional neural network, the convolutional neural network includes at least three channels, and the second latent variable corresponds to the at least three channels. For example, the second latent variable is an $m \times n$ matrix.

The latent variable compensation parameter is a vector. A quantity of dimensions of the vector is less than a quantity of channels of the convolutional neural network, a first vector element in the vector corresponds to at least two of the at least three channels, and the at least two channels include a second channel and a first channel. The first vector element indicates quantization errors of all elements that are in a first submatrix of the $m \times n$ matrix and that meet the preset condition, and the first vector element further indicates quantization errors of all elements that are in a second submatrix of the $m \times n$ matrix and that meet the preset condition. The first submatrix corresponds to the first channel, the second submatrix corresponds to the second channel, a quantity of elements of the first submatrix is less than m×n, and a quantity of elements of the second submatrix is less than m×n.

For another example, when the encoding neural network is a convolutional neural network, the convolutional neural network includes at least two channels, the third latent variable corresponds to the at least two channels, the at least two channels include a first channel, and the third latent variable is an m×n matrix.

The latent variable compensation parameter is a scalar. The scalar indicates quantization errors of all elements that are in the third latent variable and that meet the preset condition.

Alternatively, the latent variable compensation parameter is a vector. A quantity of dimensions of the vector is equal to a quantity of channels of the convolutional neural network, vector elements in the vector one-to-one correspond to the at least two channels, a first vector element in the vector elements corresponds to the first channel, the first vector element indicates quantization errors of all elements that are in a submatrix of the m×n matrix and that meet the preset condition, and the first channel corresponds to the submatrix. A quantity of elements of the submatrix is less than m×n.

For another example, when the encoding neural network is a convolutional neural network, the convolutional neural network includes at least three channels, the third latent variable corresponds to the at least three channels, and the third latent variable is an m×n matrix.

The latent variable compensation parameter is a vector. A quantity of dimensions of the vector is less than a quantity of channels of the convolutional neural network, a first vector element in the vector corresponds to at least two of the at least three channels, and the at least two channels include a second channel and a first channel. The first vector element indicates quantization errors of all elements that are in a first submatrix of the m×n matrix and that meet the preset condition, and the first vector element further indicates quantization errors of all elements that are in a second submatrix of the m×n matrix and that meet the preset condition. The first submatrix corresponds to the first channel, and the second submatrix corresponds to the second channel. A quantity of elements of the first submatrix is less than m×n, and a quantity of elements of the second submatrix is less than m×n.

For another example, when the encoding neural network is a convolutional neural network, the convolutional neural network includes at least two channels, and the second latent variable corresponds to a first channel in the at least two channels.

The latent variable compensation parameter is a scalar. The scalar indicates quantization errors of all elements that are in at least two latent variables corresponding to the at least two channels and that meet the preset condition, and the at least two latent variables include the second latent variable.

Alternatively, the latent variable compensation parameter is a vector. A quantity of dimensions of the vector may be equal to a quantity of channels of the convolutional neural network, vector elements in the vector one-to-one correspond to the at least two channels, and a vector element corresponding to the first channel in the vector indicates quantization errors of all elements that are in the second latent variable and that meet the preset condition.

For another example, when the encoding neural network is a convolutional neural network, the convolutional neural network includes at least three channels, and the second latent variable corresponds to a first channel in the at least three channels.

The latent variable compensation parameter is a vector. A quantity of dimensions of the vector is less than a quantity of channels of the convolutional neural network, a first vector element in the vector corresponds to at least two of the at least three channels, and the at least two channels include a second channel and the first channel. The first vector element indicates quantization errors of all elements that are in the second latent variable and that meet the preset condition, and the first vector element further indicates quantization errors of all elements that are in another latent variable corresponding to the second channel and that meet the preset condition.

For another example, when the encoding neural network is a convolutional neural network, the convolutional neural network includes at least two channels, and the third latent variable corresponds to a first channel in the at least two channels.

The latent variable compensation parameter is a scalar. The scalar indicates quantization errors of all elements that are in at least two latent variables corresponding to the at least two channels and that meet the preset condition, and the at least two latent variables include the third latent variable.

Alternatively, the latent variable compensation parameter is a vector. A quantity of dimensions of the vector is equal to a quantity of channels of the convolutional neural network, vector elements in the vector one-to-one correspond to the at least two channels, and a vector element corresponding to the first channel indicates quantization errors of all elements that are in the third latent variable and that meet the preset condition.

For another example, when the encoding neural network is a convolutional neural network, the convolutional neural network includes at least three channels, and the third latent variable corresponds to a first channel in the at least three channels.

The latent variable compensation parameter is a vector. A quantity of dimensions of the vector is less than a quantity of channels of the convolutional neural network, a first vector element in the vector corresponds to at least two of the at least three channels, and the at least two channels include a second channel and the first channel. The first vector element indicates quantization errors of all elements that are in the third latent variable and that meet the preset condition, and the first vector element further indicates quantization errors of all elements that are in another latent variable corresponding to the second channel and that meet the preset condition.

In some possible implementations, when there are correspondences between the first vector element and the first channel and the second channel, the correspondences between the first vector element and the first channel and the second channel are also written into the bitstream. Certainly, if the encoder side and a decoder side use a same correspondence between an element and a channel by default, the correspondences between the first vector element and the first channel and the second channel may not be written into the bitstream.

It can be learned that, in the technical solution provided in this embodiment of this application, the encoder side may obtain the latent variable compensation parameter based on a quantization error of a latent variable (that is, the latent variable compensation parameter can indicate a related quantization error caused by quantizing the latent variable by the encoder side) and write an encoded latent variable compensation parameter into the bitstream. Based on this, the decoder side can perform compensation processing on a related latent variable based on the latent variable compensation parameter. This helps reduce distortion of input data of a decoding neural network, thereby helping improve quality of a final decoded signal. Specifically, for example, this helps reduce a vacancy of decoding an audio signal in frequency domain, and improve subjective auditory quality of a decoded audio signal.

The following describes a related solution at a decoder side corresponding to the example solution at the encoder side shown in FIG. 2.

FIG. 3 is a schematic flowchart of an audio data decoding method according to an embodiment of this application. The audio data decoding method (corresponding to the decoder side) may include the following steps.

301: Decode a bitstream to obtain a latent variable compensation parameter and a second latent variable, where a value of a current element in the second latent variable is a quantized value.

302: Perform dequantization processing on the second latent variable to obtain a third latent variable.

Alternatively, a specific decoder may be configured to directly decode the bitstream to obtain the third latent variable. In this case, there is no need to perform the steps of decoding the bitstream to obtain the second latent variable and performing dequantization processing on the second latent variable to obtain the third latent variable.

303: Perform compensation processing on the third latent variable based on the latent variable compensation parameter, to obtain a reconstructed first latent variable.

The latent variable compensation parameter may indicate a quantization error caused by quantizing a latent variable by the encoder side.

304: Process the reconstructed first latent variable by using a decoding neural network, to generate decoded audio data.

The decoding neural network is pre-trained. A specific network structure and a training method of the decoding neural network are not limited in this application.

For example, the performing compensation processing on the third latent variable based on the latent variable compensation parameter, to obtain a reconstructed first latent variable may include: determining, based on the second latent variable or the third latent variable, an element that is in the third latent variable and that meets a preset condition; and performing, based on the latent variable compensation parameter, compensation processing on the element that is in the third latent variable and that meets the preset condition, to obtain the reconstructed first latent variable.

The determining, based on the second latent variable or the third latent variable, an element that is in the third latent variable and that meets a preset condition may include: determining an element that is in the second latent variable and that meets the preset condition. The element that is in the third latent variable and that meets the preset condition is in a location correspondence to the element that is in the second latent variable and that meets the preset condition. Alternatively, the element that is in the third latent variable and meets the preset condition may be directly determined based on the third latent variable.

During actual application, there may be various manners of performing, based on the latent variable compensation parameter, compensation processing on the element that is in the third latent variable and that meets the preset condition, to obtain the reconstructed first latent variable. For example, the performing, based on the latent variable compensation parameter, compensation processing on the element that is in the third latent variable and that meets the preset condition, to obtain the reconstructed first latent variable may include:

generating random noise; performing amplitude or energy adjustment on the generated random noise based on the latent variable compensation parameter, to obtain amplitude-adjusted or energy-adjusted random noise; and performing, based on the amplitude-adjusted or energy-adjusted random noise, compensation processing on the element that is in the third latent variable and that meets the preset condition, to obtain the reconstructed first latent variable.

It may be understood that the foregoing preset condition may be various, and a preset condition that meets a requirement may be set based on a requirement of a specific scene.

For example, the third latent variable or the second latent variable includes a first element. The meeting a preset condition may include: a value of the first element is less than or equal to a preset value. The value of the first element is a quantized value when the first element is an element in the second latent variable. Alternatively, the value of the first element is a dequantized value when the first element is an element in the third latent variable.

It may be understood that forms of a latent variable processed by using decoding neural networks of different structures may be different.

In the solution of this embodiment of this application, the decoding neural network may be specifically a fully connected neural network, a convolutional neural network, or another neural network. When the decoding neural network is a convolutional neural network, a quantity of channels of the convolutional neural network may be one, two, three, four, or more.

For example, when the decoding neural network is a convolutional neural network, the convolutional neural network includes only one channel. The latent variable compensation parameter is a scalar. The scalar is used to compensate for all elements that are in the third latent variable and that meet the preset condition.

For another example, when the decoding neural network is a convolutional neural network, the convolutional neural network includes at least two channels, the third latent variable corresponds to the at least two channels, the at least two channels include a first channel, and the third latent variable is an $m \times n$ matrix.

The latent variable compensation parameter may be a scalar. The scalar is used to compensate for all elements that are in the third latent variable and that meet the preset condition.

Alternatively, the latent variable compensation parameter may be a vector. A quantity of dimensions of the vector is equal to a quantity of channels of the convolutional neural network, vector elements in the vector one-to-one correspond to the at least two channels, a first vector element in the vector elements corresponds to the first channel, the first vector element is used to compensate for all elements that are in a submatrix of the $m \times n$ matrix and that meet the preset condition, and the first channel corresponds to the submatrix. A quantity of elements of the submatrix is less than $m \times n$.

For another example, when the decoding neural network is a convolutional neural network, the convolutional neural network includes at least three channels, the third latent variable corresponds to the at least three channels, and the third latent variable is an $m \times n$ matrix. The latent variable compensation parameter is a vector. A quantity of dimensions of the vector is less than a quantity of channels of the convolutional neural network, a first vector element in the vector corresponds to at least two of the at least three channels, and the at least two channels include a second channel and a first channel. The first vector element is used to compensate for all elements that are in a first submatrix of the $m \times n$ matrix and that meet the preset condition, and the first vector element is further used to compensate for all elements that are in a second submatrix of the $m \times n$ matrix and that meet the preset condition. The first submatrix corresponds to the first channel, the second submatrix corresponds to the second channel, a quantity of elements of the first submatrix is less than $m \times n$, and a quantity of elements of the second submatrix is less than $m \times n$.

For another example, when the decoding neural network is a convolutional neural network, the convolutional neural network includes at least two channels, and the third latent variable corresponds to a first channel in the at least two channels.

The latent variable compensation parameter is a scalar. The scalar is used to compensate for all elements that are in at least two latent variables corresponding to the at least two channels and that meet the preset condition, and the at least two latent variables include the third latent variable. Alternatively, the latent variable compensation parameter is a vector. A quantity of dimensions of the vector is equal to a quantity of channels of the convolutional neural network, vector elements in the vector one-to-one correspond to the at least two channels, and a vector element corresponding to the first channel in the vector is used to compensate for all elements that are in the third latent variable and that meet the preset condition.

For another example, when the decoding neural network is a convolutional neural network, the convolutional neural network includes at least three channels, and the third latent variable corresponds to a first channel in the at least three channels. The latent variable compensation parameter is a vector. A quantity of dimensions of the vector is less than a quantity of channels of the convolutional neural network, a first vector element in the vector corresponds to at least two of the at least three channels, and the at least two channels include a second channel and the first channel. The first vector element is used to compensate for all elements that are in the third latent variable and that meet the preset condition, and the first vector element is further used to compensate for all elements that are in another latent variable corresponding to the second channel and that meet the preset condition.

It can be learned that, in the solution provided in this embodiment of this application, the encoder side writes the latent variable compensation parameter into the bitstream, and the latent variable compensation parameter can indicate the related quantization error caused by quantizing the latent variable by the encoder side. After obtaining the bitstream, the decoder side may perform, based on the latent variable compensation parameter, compensation processing on the quantization error caused by quantizing the latent variable by the encoder side. This helps reduce distortion of input data of the decoding neural network, thereby helping improve quality of a final decoded signal. For example, this helps reduce a vacancy of decoding an audio signal in frequency domain, and improve subjective auditory quality of a decoded audio signal.

The following uses some more specific embodiments as an example for description.

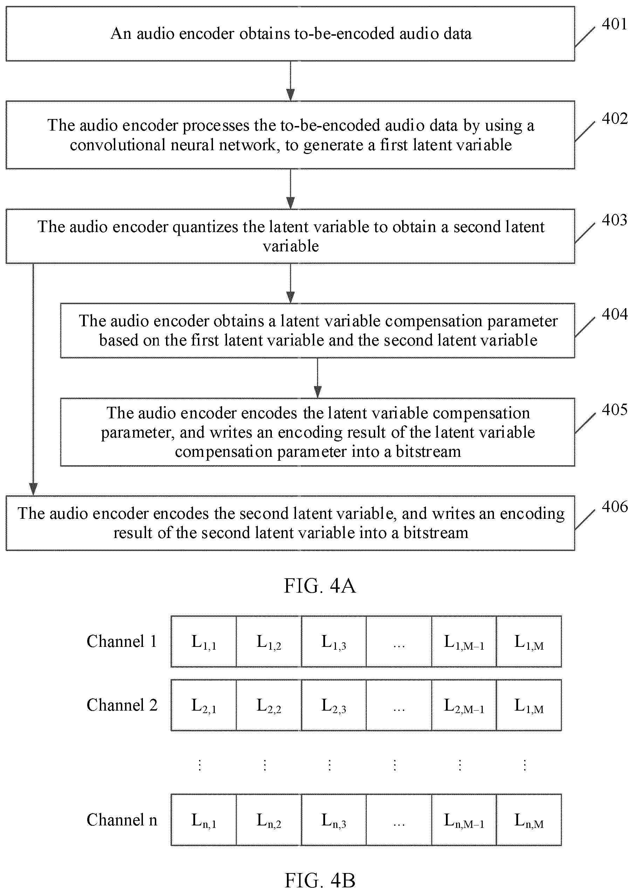

FIG. 4A is a schematic flowchart of another audio data encoding method according to an embodiment of this application. In the solution of this embodiment, an example in which an encoding neural network is a convolutional neural network is used for description. The another audio data encoding method (corresponding to an encoder side) may include the following steps.

401: An audio encoder obtains to-be-encoded audio data.

The to-be-encoded audio data may be a to-be-encoded audio signal or a to-be-encoded audio feature.

The to-be-encoded audio signal may be a time-domain audio signal. The to-be-encoded audio signal may alternatively be a frequency-domain signal obtained by performing time-frequency transform on a time-domain signal. For example, the frequency-domain signal may be a frequency-domain signal obtained by performing MDCT on a time-domain audio signal or a frequency-domain signal obtained by performing FFT on a time-domain audio signal. Alternatively, the to-be-encoded signal may be a signal obtained by filtering by a QMF. Alternatively, the to-be-encoded signal may be a residual signal, for example, another encoded residual signal or a residual signal obtained by filtering by using LPC. The to-be-encoded audio feature may be a feature extracted based on an audio signal, for example, a Mel-frequency cepstral coefficient or a latent variable obtained by using a neural network.

402: The audio encoder processes the to-be-encoded audio data by using a convolutional neural network, to generate a first latent variable.

The first latent variable output by the convolutional neural network (CNN network) is an N*M-dimensional matrix, where N is a quantity of channels (channels) of the CNN network, and M is a size of a latent variable (latent size) of each channel of the CNN network. Refer to an example shown in FIG. 4B. FIG. 4B is a schematic diagram of a latent variable of a CNN network. A channel sequence number may be counted from 1 or may be counted from 0, and element sequence numbers of latent variables in all channels are the same.

403: The audio encoder quantizes the first latent variable to obtain a second latent variable.

It may be understood that a value of an element (element) in the first latent variable is an unquantized value, and a value of an element in the second latent variable is a quantized value.

For example, scalar quantization may be performed on each element of the first latent variable. A quantization step of the scalar quantization may be determined based on different encoding rates. The scalar quantization may further have an offset. For example, after offset processing is performed on a to-be-quantized latent variable, scalar quantization is performed based on a determined quantization step. A quantization method for quantizing the latent variable may alternatively be implemented by using another quantization technology. This is not limited in this application.

404: The audio encoder obtains a latent variable compensation parameter based on the first latent variable and the second latent variable.

Specific manners of obtaining the latent variable compensation parameter may vary based on different forms of a latent variable. A basic principle is to determine a value of the latent variable compensation parameter based on a quantization error of an element that is in the latent variable and that meets a preset condition. The latent variable compensation parameter may indicate the quantization error of the element that is in the latent variable and that meets the preset condition.

In a possible implementation, an average value of quantization errors of all elements that meet the condition is used as the value of the latent variable compensation parameter. In another possible implementation, a weighted average value of quantization errors of all elements that meet the condition is used as the value of the latent variable compensation parameter, and a value of the weighted value may be related to a sequence number of the element. The element that meets the preset condition may be an element that is in the second latent variable and that meets the preset condition. The element that is in the second latent variable and that meets the preset condition may be an element whose element value is a minimum quantized value, may be an element whose element value is an intermediate value of a quantization range, or may be an element whose element value is less than or equal to a preset threshold. When values of the quantization range include a positive number and a negative number, whether a quantized value is an intermediate value of a quantization range may be selected as a condition. For example, if a value of a quantized value ranges from -10 to 10, and an intermediate value of the quantization range is 0, a quantization error of an element whose quantized value is 0 may be selected to count an average value of quantization errors. The element that meets the preset condition may alternatively be an element that is in the third latent variable and that meets the preset condition. The third latent variable is obtained by performing dequantization processing on the second latent variable. Similarly, the element that is in the third latent variable and that meets the preset condition may be an element whose element value is equal to a minimum dequantized value, may be an element whose element value is equal to a preset value, or may be an element whose element value is less than or equal to a preset threshold.

The quantization error mentioned in embodiments of this application may be an amplitude difference or an energy difference between a to-be-quantized original value and a quantized value, an absolute value of the amplitude difference or energy difference, or the like, or may be an amplitude difference or an energy difference between a to-be-quantized original value and a dequantized value, an absolute value of the amplitude difference or energy difference, or the like.

When the encoding neural network is a CNN network, a method for extracting the latent variable compensation parameter may include: counting quantization errors of elements that are in latent variables of all channels and that meet the condition, and determining, based on the quantization errors of the elements that are in the latent variables of all channels and that meet the condition, an average quantization error as the value of the latent variable compensation parameter. When the encoding neural network is a CNN network, the first latent variable output by the CNN network is an N*M-dimensional matrix, and is denoted as L(n, k), where n = 0, 1, ..., and N - 1, and k = 0, 1, ..., and M - 1. N is a quantity of channels of the CNN network, and M is a size of the latent variable (latent size), that is, is a quantity of dimensions of a latent variable of each channel. The third latent variable is denoted as $\hat{L}$(n, k), where n = 0, 1, ..., and N - 1, and k = 0, 1, ..., *and M* - 1 . The latent variable compensation parameter NF is a scalar. A possible pseudocode for calculating the latent variable compensation parameter NF may be as follows. eps1 indicates a preset minimum value, and TH1 is a preset value.

$$ERR = eps1;$$
$$NUM = 0;$$
$$For (n = 0; n < N; n{+}{+})\{$$
$$\quad For (k = 0; k < M; k{+}{+})\{$$

$$\quad If (\hat{L}(n,k) == TH1)\{$$
$$\quad\quad ERR \mathrel{+}= \left|L(n,k) - \hat{L}(n,k)\right|;$$
$$\quad\quad NUM{+}{+};$$
$$\quad \}$$
$$\quad \}$$
$$\}$$
$$If (NUM \mathrel{!}= 0)\{$$
$$\quad NF = ERR/NUM;$$
$$\}else \{$$
$$\quad NF = 0;$$
$$\}$$

When the encoding neural network is a CNN network, another method for extracting the latent variable compensation parameter may include: separately determining, in each channel, a quantization error of an element that is in a latent variable and that meets the condition, and determining, based on the quantization error of the element that meets the condition, an average quantization error as the value of the latent variable compensation parameter corresponding to the channel. For example, it is assumed that the encoding neural network is a CNN network, the first latent variable output by the encoding neural network is an N*M-dimensional matrix, and is denoted as L(n, k), where n = 0, 1, ... , and N - 1, and k = 0, 1, ... , and M - 1. N is a quantity of channels of the CNN network, and M is a size of the latent variable (latent size). eps1 is a preset minimum value, and TH1 is a preset value. The third latent variable is denoted as $\hat{L}$(n, k), where n = 0, 1, ..., and N - 1, and k = 0, 1, ... , and M - 1. The latent variable compensation parameter is denoted as NF(n), where n = 0, 1, ... , and N - 1. NF(n) is a vector, and a quantity of dimensions of the NF(n) is equal to the quantity of channels of the CNN network. A possible pseudocode for calculating the latent variable compensation parameter NF(n) may be shown as an example in the following.

$$For (n = 0; n < N; n{+}{+})\{$$
$$\quad ERR = eps1;$$
$$\quad NUM = 0;$$
$$\quad For (k = 0; k < M; k{+}{+})\{$$
$$\quad\quad If (\hat{L}(n,k) == TH1)\{$$
$$\quad\quad\quad ERR \mathrel{+}= \left|L(n,k) - \hat{L}(n,k)\right|$$
$$\quad\quad \}$$
$$\quad If (NUM \mathrel{!}= 0)\{$$
$$\quad\quad NF[n] = ERR/NUM;$$
$$\quad \}else \{$$
$$\quad\quad NF[n] = 0;$$
$$\quad \}$$
$$\quad \}$$
$$\}$$

When the encoding neural network is a CNN network, a method for extracting the latent variable compensation parameter may alternatively be as follows. When the latent variable compensation parameter is a vector, and a quantity of dimensions of the vector is less than a quantity of channels of the convolutional neural network, a first vector element of the latent variable compensation parameter may correspond to at least two channels of a latent variable. An element that is in the channel of the latent variable corresponding to the first vector element and that meets the condition is determined, and an average quantization error is determined, based on a quantization error of the element that meets the condition, as a value of the first vector element of the latent variable compensation parameter.

Specifically, for example, it is assumed that the encoding neural network is a CNN network, the first latent variable output by the encoding neural network is an N*M-dimensional matrix, and is denoted as L(n, k), where n = 0, 1, ... , and N - 1, and k = 0, 1, ... , and M - 1. N is a quantity of channels of the CNN network, and M is a size of the latent variable (latent size). The latent variable compensation parameter NF(j) is a vector, where j = 0,1, ... , and P - 1. A quantity P of dimensions of the vector is less than the quantity N of the channels of the CNN network. A $j^{th}$ vector element of the latent variable compensation parameter NF(j) corresponds to channels from ADD(j)$^{th}$ to (ADD(j+1)-1)$^{th}$ in the CNN network. ADD is a correspondence between a vector element of the latent variable compensation parameter and a channel of the CNN network, and may be a pre-stored table. ADD(j) is a minimum value of a channel sequence number corresponding to the $j^{th}$ vector element of the latent variable compensation parameter. A possible pseudocode for calculating the first vector element of the latent variable compensation parameter NF(j) may be shown as an example in the following.

```
For (j =0; j <P; j++)
{
    ERR = eps1;
    NUM = 0;
    Start = ADD[j];
    End = ADD[j+1];
    For (n= Start; n < End; n++){
        For (k = 0; k < M; k++){
            If (L̂(n, k) == TH1){
            ERR += |L(n, k) − L̂(n, k)|
            }
            If (NUM != 0){
                NF[j] = ERR/NUM;
            }else {
                NF[j] = 0;
            }
        }
    }
}
```

It should be noted that, when the encoding neural network is a CNN network, calculation of error and ERR and calculation of NF may be performed in energy domain or amplitude domain.

405: Encode the latent variable compensation parameter, and write an encoding result of the latent variable compensation parameter into a bitstream.

For example, the encoding the latent variable compensation parameter, and writing an encoding result of the latent variable compensation parameter into a bitstream may include: performing scalar quantization or vector quantization on the latent variable compensation parameter, to obtain a quantization index of the latent variable compensation parameter, encoding the quantization index of the latent variable compensation parameter, and writing an encoding result of the quantization index of the latent variable compensation parameter into the bitstream.

Certainly, the latent variable compensation parameter may alternatively be quantized, entropy coding may be performed on a quantized latent variable compensation parameter, and an encoding result is written into the bitstream.

406: Encode the second latent variable, and write an encoding result of the second latent variable into a bitstream.

For example, the encoding the second latent variable may include: performing arithmetic coding on the second latent variable by using a scalable entropy coding model, or performing arithmetic coding on the second latent variable by using an entropy coding model with a preset probability distribution.

It may be understood that there is no necessary sequence between the step 406 and the steps 404 and 405. The step 406 may be performed before the steps 404 and 405, may be performed later than the steps 404 and 405, or may be performed in parallel with the steps 404 and 405.

It can be learned that, in the solution provided in this embodiment of this application, at the encoder side, the latent variable compensation parameter is obtained based on a related quantization error of a latent variable, and the latent variable compensation parameter is encoded and written into the bitstream. Based on this, a decoder side can compensate for, based on the latent variable compensation parameter, a quantization error caused by quantizing the latent variable by the encoder side. This helps reduce distortion of input data of the convolutional neural network at the decoder side, thereby helping improve quality of a final decoded signal. Specifically, for example, this helps reduce a vacancy of decoding an audio signal in frequency domain, and improve subjective auditory quality of a decoded audio signal.

The following describes a related solution at a decoder side corresponding to the solution at the encoder side described in FIG. 4A.

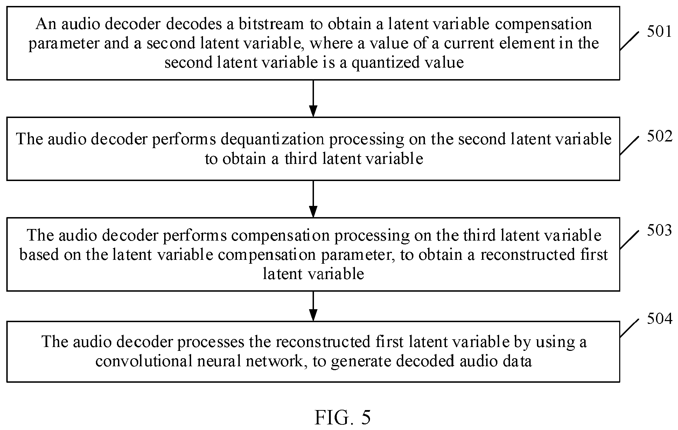

FIG. 5 is a schematic flowchart of another audio data decoding method according to an embodiment of this application. In this embodiment, an example in which a decoding neural network is a convolutional neural network is used. The another audio data decoding method (corresponding to the decoder side) may include the following steps.

501: An audio decoder decodes a received bitstream to obtain a latent variable compensation parameter and a second latent variable (a value of an element in the second latent variable is a quantized value).

A process of decoding the latent variable compensation parameter is an inverse process of quantization encoding of the latent variable compensation parameter. For example, a quantization index of the latent variable compensation parameter may be obtained by parsing the bitstream, and the latent variable compensation parameter may be obtained by using a dequantization method corresponding to the encoder side based on the quantization index.

A process of decoding the second latent variable is an inverse process of encoding the second latent variable by the encoder side. For example, entropy decoding is performed based on the bitstream, to obtain the second latent variable.

502: The audio decoder performs dequantization processing on the second latent variable to obtain a third latent variable.

A process in which the audio decoder obtains a dequantized latent variable is an inverse process in which the encoder side quantizes a latent variable. For example, dequantization processing is performed on a latent variable obtained through scalar quantization, to obtain a dequantized latent variable.

503: The audio decoder performs compensation processing on the third latent variable based on the latent variable compensation parameter, to obtain a reconstructed first latent variable.

For example, the performing compensation processing on the third latent variable based on the latent variable compensation parameter, to obtain a reconstructed first latent variable may include: determining, based on the second latent variable or the third latent variable, an element that is in the third latent variable and that meets a preset condition; and performing, based on the latent variable compensation parameter, compensation processing on the element that is in the third latent variable and that meets the preset condition, to obtain the reconstructed first latent variable.

During actual application, there may be various manners of performing, based on the latent variable compensation parameter, compensation processing on the element that is in the third latent variable and that meets the preset condition, to obtain the reconstructed first latent variable. For example, the performing, based on the latent variable compensation parameter, compensation processing on the element that is in the third latent variable and that meets the preset condition, to obtain the reconstructed first latent variable may include:

generating random noise; performing amplitude or energy adjustment on the generated random noise based on the latent variable compensation parameter, to obtain amplitude-adjusted or energy-adjusted random noise; and performing, based on the amplitude-adjusted or energy-adjusted random noise, compensation processing on the element that is in the third latent variable and that meets the preset condition, to obtain the reconstructed first latent variable.

Specifically, for example, it is assumed that the decoding neural network is a CNN network, the third latent variable is an N*M-dimensional matrix, and the third latent variable is, for example, denoted as $\widehat{L\_dec}(n,k)$, where n = 0, 1, ..., and N - 1, and k = 0, 1, ..., and M - 1. N is a quantity of channels of the CNN network, and M is a size of the latent variable, that is, is a quantity of dimensions of a latent variable of each channel. The latent variable compensation parameter is a scalar, and is denoted as NF. A possible pseudocode for performing compensation processing on the third latent variable based on the latent variable compensation parameter, to obtain the reconstructed first latent variable may be shown as an example in the following. FAC is a parameter for controlling a compensation degree, and is generally a preset constant, and TH1 is a minimum dequantized value.

$$
\begin{aligned}
&\text{For } (n = 0;\ n < N;\ n{+}{+})\{ \\
&\quad \text{For } (k = 0;\ k < M;\ k{+}{+})\{ \\
&\qquad \text{If } (\hat{L}(n,k) == TH1)\{ \\
&\qquad\quad \text{Noise} = \text{FAC} * \text{rand}(-1,\ 1) * \text{NF}; \\
&\qquad\quad \hat{L}(n,k) {+}{=} Noise; \\
&\qquad \} \\
&\quad \} \\
&\}
\end{aligned}
$$

The parameter NF in the pseudocode is represented by amplitude. If the parameter NF is represented by energy, when amplitude adjustment is performed on noise, the NF may be first converted to an amplitude domain, and then amplitude adjustment is performed on the noise, that is,
$\text{Noise} = \text{FAC} * \text{rand}(-1,1) * \sqrt{\text{NF}}$.

If the latent variable compensation parameter is a vector whose quantity of dimensions is N, and N is a quantity of channels of the CNN network, that is, the latent variable compensation parameter at the decoder side is NF(n). For example, NF(n) is a parameter represented by amplitude. A possible pseudocode for performing compensation processing on the third latent variable based on the latent variable compensation parameter, to obtain the reconstructed first latent variable may be shown as an example in the following.

```
For (n = 0; n < N; n++){
    For (k = 0; k < M; k++){
        If (L̂(n, k) == TH1){
            Noise = FAC * rand(−1, 1) * NF (n);
            L̂(n, k)+= Noise;
        }
    }
}
```

FAC is a parameter for controlling a compensation degree, and is generally a preset constant, and TH1 is a minimum dequantized value.

If the latent variable compensation parameter is a vector whose quantity of dimensions is P, the quantity P of dimensions of the vector is less than the quantity N of channels of the CNN network. The latent variable compensation parameter at the decoder side is NF(j), where j = 0, 1, ... , and P - 1. A possible pseudocode for performing compensation processing on the third latent variable based on the latent variable compensation parameter, to obtain the reconstructed first latent variable may be shown as an example in the following.

```
For (j =0; j <P; j++)
{
    Start = ADD[j];
    End = ADD[j+1];
    For (n= Start; n < End; n++){
        For (k = 0; k < M; k++){
            If (L̂(n, k) == TH1){
                Noise = FAC * rand(−1, 1) * NF (j);
                L̂(n, k)+= Noise;
            }
        }
    }
}
```

NF(j) corresponds to an amplitude domain.

Certainly, another similar compensation method may alternatively be used, and examples are not provided herein one by one.

A compensated latent variable, namely, a compensated third latent variable may be directly used as the reconstructed first latent variable, or other post-processing may be performed on a compensated latent variable, and a post-processed latent variable is used as the reconstructed first latent variable.

504: The audio decoder processes the reconstructed first latent variable by using the decoding neural network, to generate decoded audio data.

It may be understood that the decoding neural network and an encoding neural network at the encoder side are matched, and both are pre-trained. Based on the reconstructed first latent variable, processing is performed by using the decoding neural network. An output of the decoding neural network may be directly output as a decoded audio signal. An output of the decoding neural network may be a restored time-domain audio signal, or may be a frequency-domain signal. If the output is a frequency-domain signal, a time-domain audio signal is obtained through frequency domain-to-time domain transform. An output of the decoding neural network may alternatively be an audio residual signal. If the output is an audio residual signal, other corresponding processing needs to be performed after processing is performed by using the decoding neural network, to obtain a decoded audio signal. This is not limited in this application.

It can be learned that, in the solution provided in this embodiment of this application, at the encoder side, the latent variable compensation parameter is obtained based on a quantization error of a latent variable, and the latent variable compensation parameter is encoded and written into the bitstream. After the decoder side obtains the bitstream, it becomes possible to perform, based on the latent variable compensation parameter, compensation processing on a related quantization error caused by quantizing the latent variable by the encoder side. This helps reduce distortion of input data of the convolutional neural network at the decoder side, thereby helping improve quality of a final decoded signal. Specifically, for example, this helps reduce a vacancy of decoding an audio signal in frequency domain, and improve subjective auditory quality of a decoded audio signal.

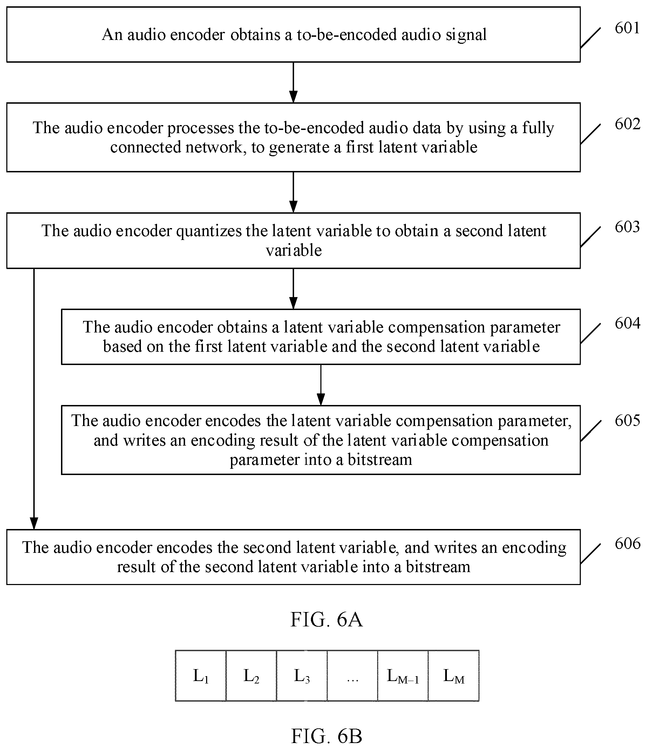

FIG. 6A is a schematic flowchart of another audio data encoding method according to an embodiment of this application. In this embodiment, an example in which an encoding neural network is a fully connected network is used. The another audio data encoding method (corresponding to an encoder side) may include the following steps.

601: An audio encoder obtains to-be-encoded audio data.

602: The audio encoder processes the to-be-encoded audio data by using a fully connected network, to generate a first latent variable.

The first latent variable output by the fully connected network is an M-dimensional vector, and a quantity M of dimensions of the vector is a size of the first latent variable (latent size). Refer to an example shown in FIG. 6B.

FIG. 6B provides a possible schematic diagram of a latent variable of a fully connected network.

603: The audio encoder quantizes the first latent variable to obtain a second latent variable (a value of an element in the second latent variable is a quantized value).

For example, scalar quantization may be performed on each element of the first latent variable. A quantization step of the scalar quantization may be determined based on different encoding rates. The scalar quantization may further have an offset. For example, after offset processing is performed on a to-be-quantized latent variable, scalar quantization is performed based on a determined quantization step. A quantization method for quantizing the latent variable may alternatively be implemented by using another existing quantization technology. This is not limited in this application.

604: The audio encoder obtains a latent variable compensation parameter based on the first latent variable and the second latent variable.

When the encoding neural network is a fully connected network, a latent variable output by the fully connected network, that is, the first latent variable, is a one-dimensional vector, and may be denoted as $L(k)$, where $k = 0,1, ... ,$ and $M$ - 1. M is a size of the latent variable.

A dequantized latent variable, namely, a third latent variable obtained by performing dequantization processing based on the second latent variable is denoted as $\hat{L}(k)$, where $k = 0,1, ... ,$ and $M$ - 1. A specific method for calculating the latent variable compensation parameter NF may include: if $\hat{L}(k)$ is equal to a minimum dequantized value (the minimum dequantized value is, for example, 0), calculating a quantization error $|\hat{L}(k) - L(k)|$ of a current element position; and averaging quantization errors corresponding to all elements that satisfy that $\hat{L}(k)$ is equal to a minimum quantized value, and using an averaged error as the latent variable compensation parameter.

A pseudocode for calculating the latent variable compensation parameter NF may be shown as an example in the following. eps1 is a preset minimum value, and TH1 is the minimum dequantized value.

$$ERR = eps1;$$
$$NUM = 0;$$
$$For(k=0;k<M;k++)$$
$$\{$$
$$\quad if(\hat{L}(k) == TH1)$$
$$\quad \{$$
$$\quad\quad ERR += \left|\hat{L}(k) - L(k)\right|;$$
$$\quad\quad NUM ++;$$
$$\quad \}$$
$$\}$$
$$If (NUM != 0)\{$$
$$\quad NF = ERR/NUM;$$
$$\}else \{$$
$$\quad NF = 0;$$
$$\}$$

For another example, when the encoding neural network is a fully connected network, in the method for extracting the latent variable compensation parameter, the quantization error ERR is calculated based on energy of a difference between an unquantized value and a dequantized value in addition to an absolute value of the difference between the unquantized value and the dequantized value. For example, another pseudocode for calculating the latent variable compensation parameter NF may be shown as an example in the following. eps1 may be a preset minimum value, and TH1 is a minimum dequantized value.

$$ERR = eps1;$$
$$NUM = 0;$$
$$For(k=0;k<M;k++)$$
$$\{$$
$$\quad if(\hat{L}(k) == TH1)$$
$$\quad \{$$
$$\quad\quad ERR += \left(\hat{L}(k) - L(k)\right)^{2};$$
$$\quad\quad NUM ++;$$
$$\quad \}$$
$$\}$$
$$If (NUM != 0)\{$$
$$\quad NF = ERR/NUM;$$
$$\}else \{$$
$$\quad NF = 0;$$
$$\}$$

In addition, when the ERR is calculated in an energy dimension, for example, based on $(\hat{L}(k) - L(k))^2$ or $(|\hat{L}(k) - L(k)|)^2$, the latent variable compensation parameter NF may be average error energy, for example, NF = ERR/NUM, or may be an average error magnitude, for example, $NF = \sqrt{ERR/NUM}$. The parameter NF may alternatively be calculated in logarithmic domain.

605: The audio encoder encodes the latent variable compensation parameter, and writes an encoding result of the latent variable compensation parameter into a bitstream.

For example, the encoding the latent variable compensation parameter, and writing an encoding result of the latent variable compensation parameter into a bitstream may include: performing scalar quantization or vector quantization on the latent variable compensation parameter, to obtain a quantization index of the latent variable compensation parameter, encoding the quantization index of the latent variable compensation parameter, and writing an encoding result of the quantization index of the latent variable compensation parameter into the bitstream.

Certainly, the latent variable compensation parameter may alternatively be quantized, entropy coding may be performed on a quantized latent variable compensation parameter, and an encoding result is written into the bitstream.

606: The audio encoder encodes the second latent variable, and writes an encoding result of the second latent variable into a bitstream.

For example, the encoding the second latent variable may include: performing arithmetic coding on the second latent variable by using a scalable entropy coding model, or performing arithmetic coding on the second latent variable by using an entropy coding model with a preset probability distribution.

It may be understood that there is no necessary sequence between the step 606 and the steps 604 and 605. The step 606 may be performed before the steps 604 and 605, may be performed later than the steps 604 and 605, or may be performed in parallel with the steps 604 and 605.

It can be learned that, in the solution provided in this embodiment of this application, at the encoder side, the latent variable compensation parameter is obtained based on a related quantization error of a latent variable, and the latent variable compensation parameter is encoded and written into the bitstream. It becomes possible for a decoder side to compensate for, based on the latent variable compensation parameter, a related quantization error caused by quantizing the latent variable by the encoder side. This helps reduce distortion of input data of the fully connected network at the decoder side, thereby helping improve quality of a final decoded signal. Specifically, for example, this helps reduce a vacancy of decoding an audio signal in frequency domain, and improve subjective auditory quality of a decoded audio signal.

The following describes a related solution at a decoder side corresponding to the solution at the encoder side described in FIG. 6A.

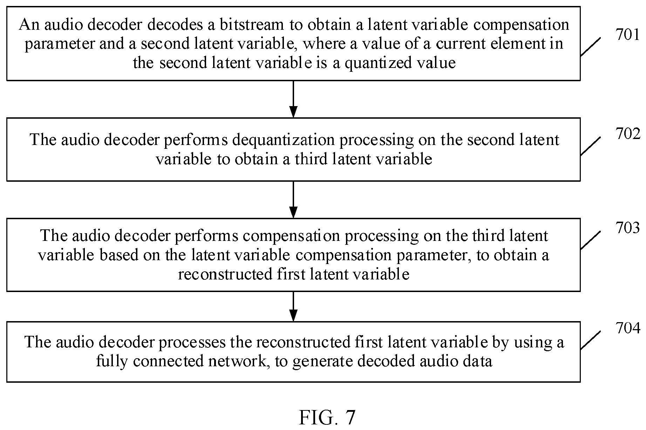

FIG. 7 is a schematic flowchart of another audio data decoding method according to an embodiment of this application. In this embodiment, an example in which a decoding neural network is a fully connected network is used. The another audio data decoding method (corresponding to the decoder side) may include the following steps.

701: An audio decoder decodes a received bitstream to obtain a latent variable compensation parameter and a second latent variable (a value of an element in the second latent variable is a quantized value).

A process in which the audio decoder obtains a dequantized latent variable is an inverse process in which the encoder side quantizes a latent variable. For example, dequantization processing is performed on a quantized latent variable to obtain the dequantized latent variable.

702: The audio decoder performs dequantization processing on the second latent variable to obtain a third latent variable.

A process in which the audio decoder obtains a dequantized latent variable is an inverse process in which the encoder side quantizes and encodes a latent variable. For example, arithmetic decoding is performed based on the bitstream, to obtain a quantized latent variable. Then, dequantization processing is performed on the quantized latent variable to obtain the dequantized latent variable.

703: The audio decoder performs compensation processing on the third latent variable based on the latent variable compensation parameter, to obtain a reconstructed first latent variable.

For example, the performing compensation processing on the third latent variable based on the latent variable compensation parameter, to obtain a reconstructed first latent variable may include: determining, based on the second latent variable or the third latent variable, an element that is in the third latent variable and that meets a preset condition; and performing, based on the latent variable compensation parameter, compensation processing on the element that is in the third latent variable and that meets the preset condition, to obtain the reconstructed first latent variable.

During actual application, there may be various manners of performing, based on the latent variable compensation parameter, compensation processing on the element that is in the third latent variable and that meets the preset condition, to obtain the reconstructed first latent variable. For example, the performing, based on the latent variable compensation parameter, compensation processing on the element that is in the third latent variable and that meets the preset condition, to obtain the reconstructed first latent variable may include:

generating random noise; performing amplitude or energy adjustment on the generated random noise based on the latent variable compensation parameter, to obtain amplitude-adjusted or energy-adjusted random noise; and performing, based on the amplitude-adjusted or energy-adjusted random noise, compensation processing on the element that is in the third latent variable and that meets the preset condition, to obtain the reconstructed first latent variable.

Specifically, for example, it is assumed that the decoding neural network is a fully connected network, the third latent variable is an M-dimensional vector, for example, is denoted as $\widehat{L\_dec}(k)$, where $k = 0, 1, ...,$ and $M - 1$. M is a size of the latent variable. The latent variable compensation parameter is a scalar, and is denoted as NF. For example, NF is a parameter represented by amplitude. A possible pseudocode of performing compensation processing on the third latent variable based on the latent variable compensation parameter, to obtain the reconstructed first latent variable is as follows.

```
For (k = 0; k < M; k++){
    If (L_dec(k) == TH1){
        Noise = FAC * rand(−1, 1) * NF;
    L̂(k)+= Noise;
    }
}
```

FAC is a parameter for controlling a compensation degree, and is generally a preset constant, and TH1 is a minimum dequantized value.

704: The audio decoder processes the reconstructed first latent variable by using the fully connected network, to generate decoded audio data.

It can be learned that, in the solution provided in this embodiment of this application, at the encoder side, the latent variable compensation parameter is obtained based on a quantization error of a latent variable, and the latent variable compensation parameter is encoded and written into the bitstream. After the decoder side obtains the bitstream, it becomes possible to perform, based on the latent variable compensation parameter, compensation processing on a related quantization error caused by quantizing the latent variable by the encoder side. This helps reduce distortion of input data of the fully connected network at the decoder side, thereby helping improve quality of a final decoded signal. Specifically, for example, this helps reduce a vacancy of decoding an audio signal in frequency domain, and improve subjective auditory quality of a decoded audio signal.

The following describes an example in which the solution of this application is applied to an AI encoder including a context model.

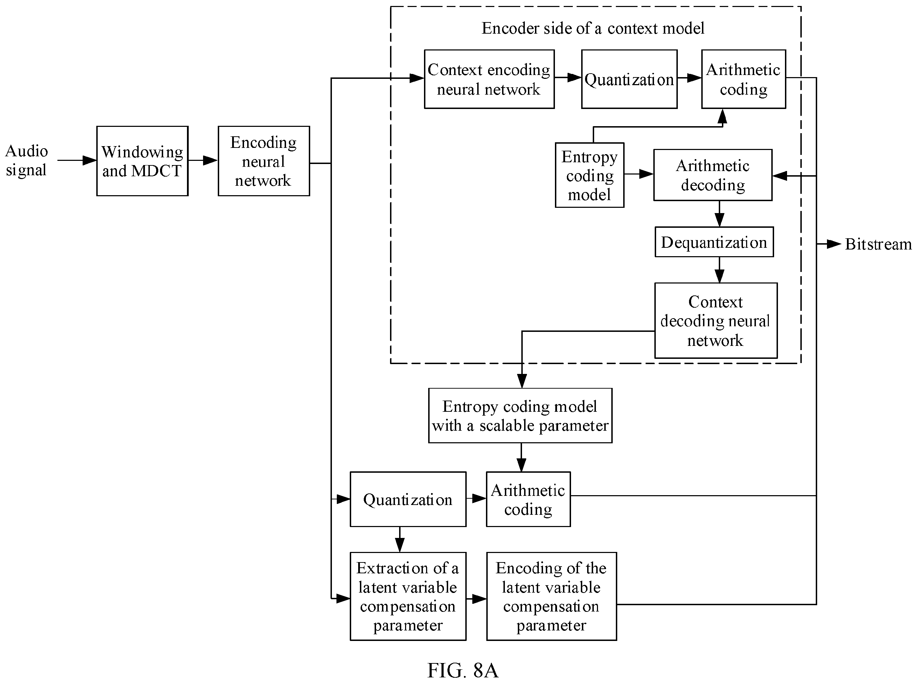

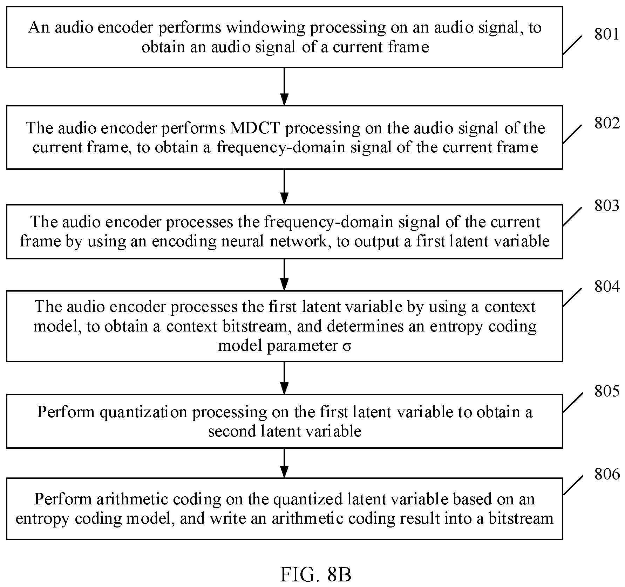

FIG. 8A and FIG. 8B are schematic flowcharts of another audio data encoding method according to an embodiment of this application. The another audio data encoding method (corresponding to an encoder side) may include the following steps.

801: An audio encoder performs windowing processing on an audio signal, to obtain an audio signal of a current frame.

802: The audio encoder performs MDCT processing on the audio signal of the current frame, to obtain a frequency-domain signal of the current frame.

803: The audio encoder processes the frequency-domain signal of the current frame by using an encoding neural network, to output a first latent variable.

An implementation may be as follows: directly using the frequency-domain signal of the current frame as an input of the encoding neural network. Another optional implementation is as follows: preprocessing the frequency-domain signal of the current frame, and using a preprocessed signal as an input of the encoding neural network. The preprocessing may include FDNS, TNS, and the like.

804: The audio encoder processes the first latent variable by using a context model, to obtain a context bitstream, and determines an entropy coding model parameter σ.

The first latent variable is processed by using a context encoding neural network, to obtain a latent variable of the context model. The latent variable of the context model represents probability distribution of a latent variable of the encoding network.

The latent variable may be directly used as an input of the context encoding neural network, or an absolute value is first taken for each element in the latent variable, and then used as an input of the context encoding neural network.

The latent variable of the context model is quantized, arithmetic coding is performed on a quantized latent variable of the context model, to obtain a context bitstream, and the context bitstream is written into a bitstream.

Arithmetic decoding is performed based on the context bitstream, and dequantization processing is performed, to obtain a dequantized latent variable of the context model.

The dequantized latent variable of the context model is processed by using a context decoding neural network, to obtain the entropy coding model parameter σ.

805: Perform quantization processing on the first latent variable to obtain a second latent variable.

806: Obtain a latent variable compensation parameter based on the first latent variable and the second latent variable, and perform quantization encoding on the latent variable compensation parameter and write an encoded result into a bitstream.

The obtaining a latent variable compensation parameter based on the first latent variable and the second latent variable may alternatively include: performing dequantization processing on the second latent variable to obtain a third latent variable, and obtaining the latent variable compensation parameter based on the third latent variable and the first latent variable.

A specific method for extracting the latent variable compensation parameter based on a latent variable before quantization and a quantized latent variable may be implemented by using any specific method for extracting the latent variable compensation parameter as an example in the foregoing embodiments.

In this embodiment, when the encoding neural network is implemented by using a CNN network, a specific manner of extracting the latent variable compensation parameter corresponding to the CNN network may include: calculating an average quantization error of an element that is in the latent variable of each channel and meets a preset condition, and then taking an average value of average quantization errors of all channels as a parameter NF. It is assumed that the latent variable output by the encoding neural network is an N*M-dimensional matrix, and is denoted as L(n, k), where n = 0,1, ..., and N - 1, and k = 0,1, ... , and M - 1. N is a quantity of channels of the CNN network, and M is a size of the latent variable. A dequantized latent variable is denoted as $\hat{L}(n, k)$, where $n = 0, 1, \ldots,$ and $N - 1$, and $k = 0, 1, \ldots,$ and $M - 1$. A pseudocode for calculating the latent variable compensation parameter NF may be shown as an example in the following. For example, TH1 = 0.

```
For (n = 0; n < N; n++){
    ERR = eps1;
    NUM = 0;
    For (k = 0; k < M; k++){
        If (L̂(n,k) == TH1){
            ERR +=;
            NUM ++;
        }
        If (NUM != 0){
            NF[n] = ERR/NUM;
        }else {
            NF[n] = 0;
        }
    }
}
ERR = 0;
For (n = 0; n < N; n++)
{
    ERR += NF[n];
}
NF = ERR/N;
```

For example, an entropy coding model corresponding to the parameter $\sigma$ may be determined from entropy coding models with scalable parameters based on the entropy coding model parameter $\sigma$, arithmetic coding is performed on a quantized latent variable based on the entropy coding model corresponding to the parameter $\sigma$, and an arithmetic coding result is written to the bitstream.

It can be learned that, in the solution provided in this embodiment of this application, in a scene of the AI encoder including the context model, at the encoder side, the latent variable compensation parameter is obtained based on a quantization error of a latent variable, and the latent variable compensation parameter is encoded and written into the bitstream. After a decoder side obtains the bitstream, it becomes possible to perform, based on the latent variable compensation parameter, compensation processing on a related quantization error caused by quantizing the latent variable by the encoder side. This helps reduce distortion of input data of the decoding neural network, thereby helping improve quality of a final decoded signal. Specifically, for example, this helps reduce a vacancy of decoding an audio signal in frequency domain, and improve subjective auditory quality of a decoded audio signal.

The following describes a related solution at a decoder side corresponding to the solution at the encoder side described in FIG. 8A.

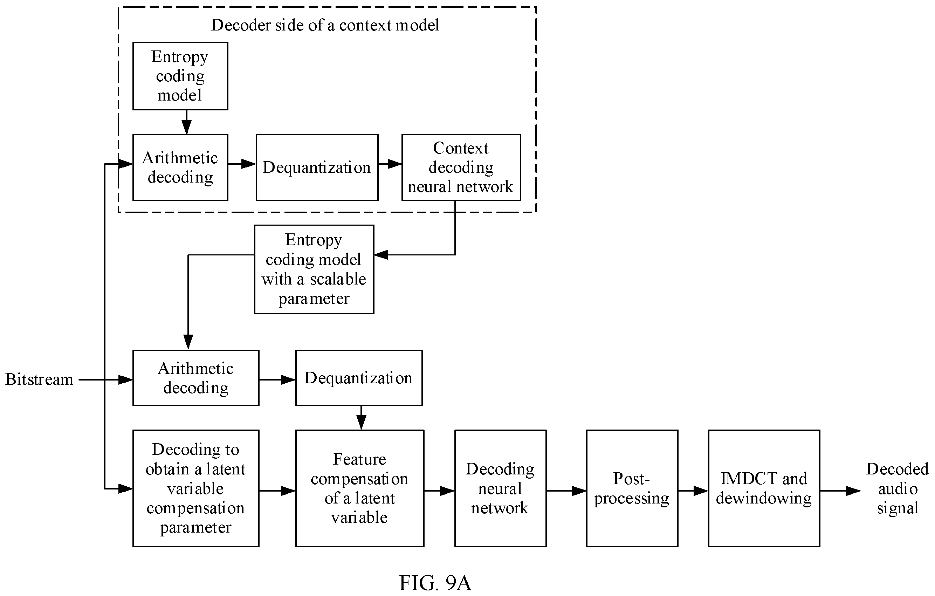

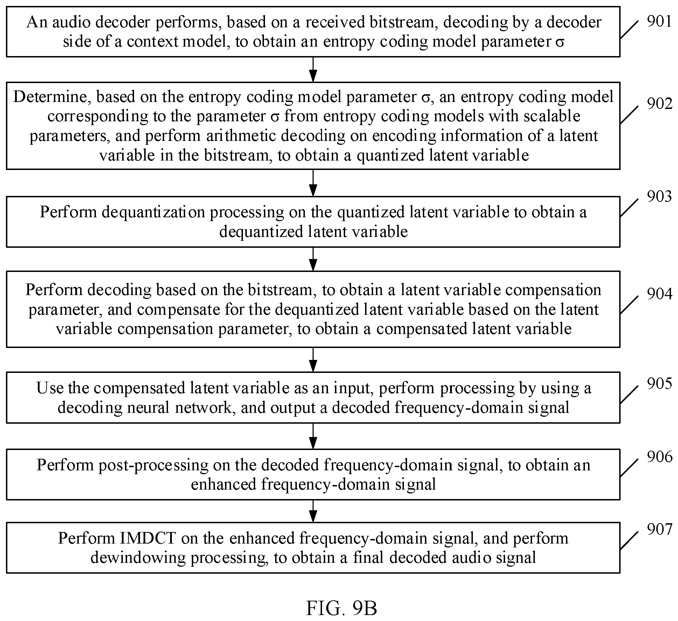

FIG. 9A and FIG. 9B are schematic flowcharts of another audio data decoding method according to an embodiment of this application. The another audio data decoding method (corresponding to the decoder side) may include the following steps.

901: An audio decoder performs, based on a received bitstream, decoding by a decoder side of a context model, to obtain an entropy coding model parameter $\sigma$.

Specifically, for example, arithmetic decoding may be performed based on the received bitstream, and dequantization processing may be performed, to obtain a dequantized latent variable of the context model. The dequantized latent variable of the context model is processed by using a context decoding neural network, to obtain the entropy coding model parameter $\sigma$.

902: Determine, based on the entropy coding model parameter $\sigma$, an entropy coding model corresponding to the parameter $\sigma$ from entropy coding models with scalable parameters, and perform arithmetic decoding on encoding information of a latent variable in the bitstream to obtain a quantized latent variable.

903: Perform dequantization processing on the quantized latent variable to obtain a dequantized latent variable.

904: Perform decoding based on the bitstream, to obtain a latent variable compensation parameter, and compensate for the dequantized latent variable based on the latent variable compensation parameter, to obtain a compensated latent variable.

A specific method for compensating for the dequantized latent variable based on the latent variable compensation parameter may be implemented by using any specific compensation method of the decoder side described in the foregoing embodiments. In this embodiment, the latent variable compensation parameter transmitted by the encoder side is a scalar NF. Therefore, the decoder side compensates for a latent variable of each channel based on the latent variable compensation parameter NF.

905: Use the compensated latent variable as an input, perform processing by using the decoding neural network, and output a decoded frequency-domain signal.

906: Perform post-processing on the decoded frequency-domain signal, to obtain an enhanced frequency-domain signal.

907: Perform IMDCT on the enhanced frequency-domain signal, and perform dewindowing processing, to obtain a final decoded audio signal.

It can be learned that, in the solution provided in this embodiment of this application, in a scene of an AI encoder including the context model, at the encoder side, the latent variable compensation parameter is obtained based on a quantization error of a latent variable, and the latent variable compensation parameter is encoded and written into the bitstream. After the decoder side obtains the bitstream, it becomes possible to perform, based on the latent variable compensation parameter, compensation processing on a related quantization error caused by quantizing the latent variable by the encoder side. This helps reduce distortion of input data of the decoding neural network, thereby helping improve quality of a final decoded signal. Specifically, for example, this helps reduce a vacancy of decoding an audio signal in frequency domain, and improve subjective auditory quality of a decoded audio signal.

The following describes an example in which the solution of this application is applied to an AI encoder excluding a context model.

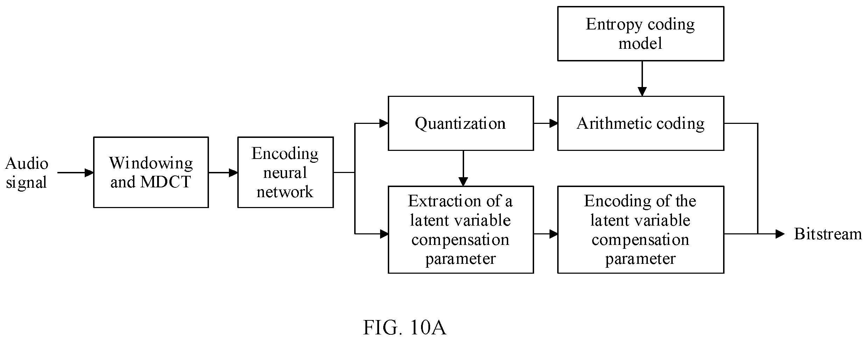

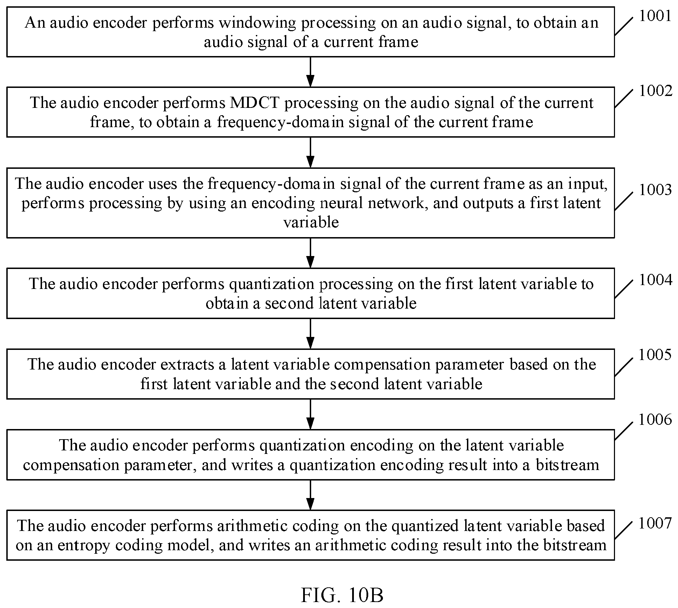

FIG. 10A and FIG. 10B are schematic flowcharts of another audio data encoding method according to an embodiment of this application. The another audio data encoding method (corresponding to an encoder side) may include the following steps.

1001: An audio encoder performs windowing processing on an audio signal, to obtain an audio signal of a current frame.

1002: The audio encoder performs MDCT processing on the audio signal of the current frame, to obtain a frequency-domain signal of the current frame.

1003: The audio encoder uses the frequency-domain signal of the current frame as an input, performs processing by using an encoding neural network, and outputs a first latent variable.

1004: The audio encoder performs quantization processing on the first latent variable to obtain a second latent variable.

1005: The audio encoder extracts a latent variable compensation parameter based on the first latent variable and the second latent variable.

The extracting a latent variable compensation parameter based on the first latent variable and the second latent variable may alternatively include: performing dequantization processing on the second latent variable to obtain a third latent variable, and extracting the latent variable compensation parameter based on the first latent variable and the third latent variable. Certainly, the latent variable compensation parameter may alternatively be extracted directly based on the first latent variable and the second latent variable.

1006: The audio encoder performs quantization encoding on the latent variable compensation parameter, and writes an encoding result into a bitstream.

1007: The audio encoder performs arithmetic coding on a quantized latent variable based on an entropy coding model, and writes an arithmetic coding result into the bitstream.

It can be learned that, in the solution provided in this embodiment of this application, in a scene of the AI encoder excluding the context model, at the encoder side, the latent variable compensation parameter is obtained based on a quantization error of a latent variable, and the latent variable compensation parameter is encoded and written into the bitstream. After a decoder side obtains the bitstream, it becomes possible to perform, based on the latent variable compensation parameter, compensation processing on a related quantization error caused by quantizing the latent variable by the encoder side. This helps reduce distortion of input data of a decoding neural network, thereby helping improve quality of a final decoded signal. Specifically, for example, this helps reduce a vacancy of decoding an audio signal in frequency domain, and improve subjective auditory quality of a decoded audio signal.

The following describes a related solution at a decoder side corresponding to the solution at the encoder side described in FIG. 10A.

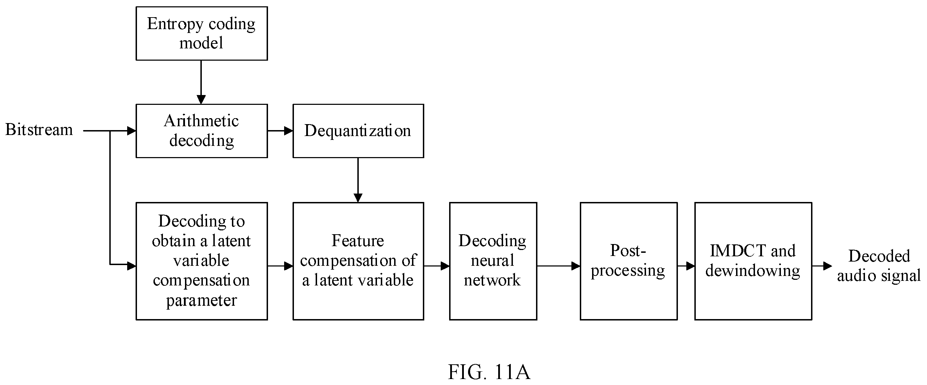

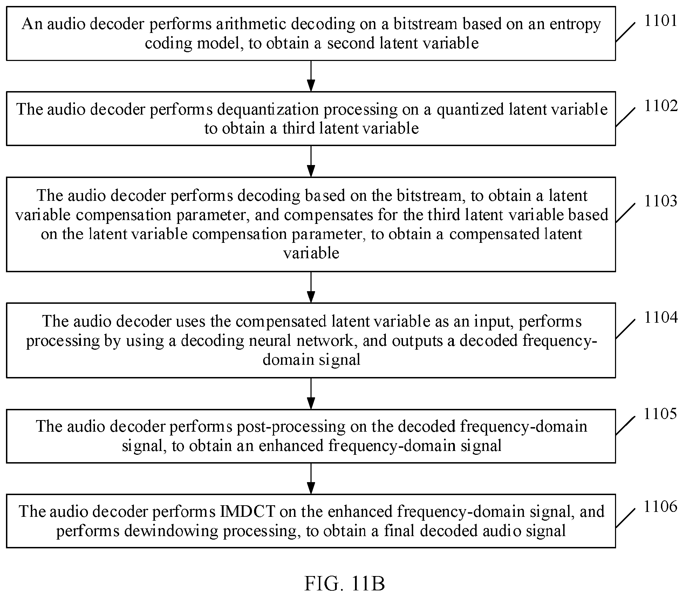

FIG. 11A and FIG. 11B are schematic flowcharts of another audio data decoding method according to an embodiment of this application. The another audio data decoding method (corresponding to the decoder side) may include the following steps.

1101: An audio decoder performs arithmetic decoding on a bitstream based on an entropy coding model, to obtain a second latent variable.

1102: The audio decoder performs dequantization processing on a quantized latent variable to obtain a third latent variable.

1103: The audio decoder performs decoding based on the bitstream, to obtain a latent variable compensation parameter, and compensates for the third latent variable based on the latent variable compensation parameter, to obtain a compensated latent variable.

1104: The audio decoder uses the compensated latent variable as an input, performs processing by using a decoding neural network, and outputs a decoded frequency-domain signal.

1105: The audio decoder performs post-processing on the decoded frequency-domain signal, to obtain an enhanced frequency-domain signal.

1106: The audio decoder performs IMDCT on the enhanced frequency-domain signal, and performs dewindowing processing, to obtain a final decoded audio signal.

It is found through testing that, the method provided in this embodiment can reduce distortion of input data of the decoding neural network, thereby improving quality of a final decoded signal.

It can be learned that, in the solution provided in this embodiment of this application, at the encoder side, the latent variable compensation parameter is obtained based on a quantization error of a latent variable, and the latent variable compensation parameter is encoded and written into the bitstream. After the decoder side obtains the bitstream, it becomes possible to perform, based on the latent variable compensation parameter, compensation processing on a related quantization error caused by quantizing the latent variable by the encoder side. This helps reduce distortion of input data of a fully connected network at the decoder side, thereby helping improve quality of a final decoded signal. Specifically, for example, this helps reduce a vacancy of decoding an audio signal in frequency domain, and improve subjective auditory quality of a decoded audio signal.

An example in which a context model is included and compensation is also performed on the context model is described below. In other words, not only a latent variable of an encoding network can be compensated, but also a latent variable of the context model can be compensated.

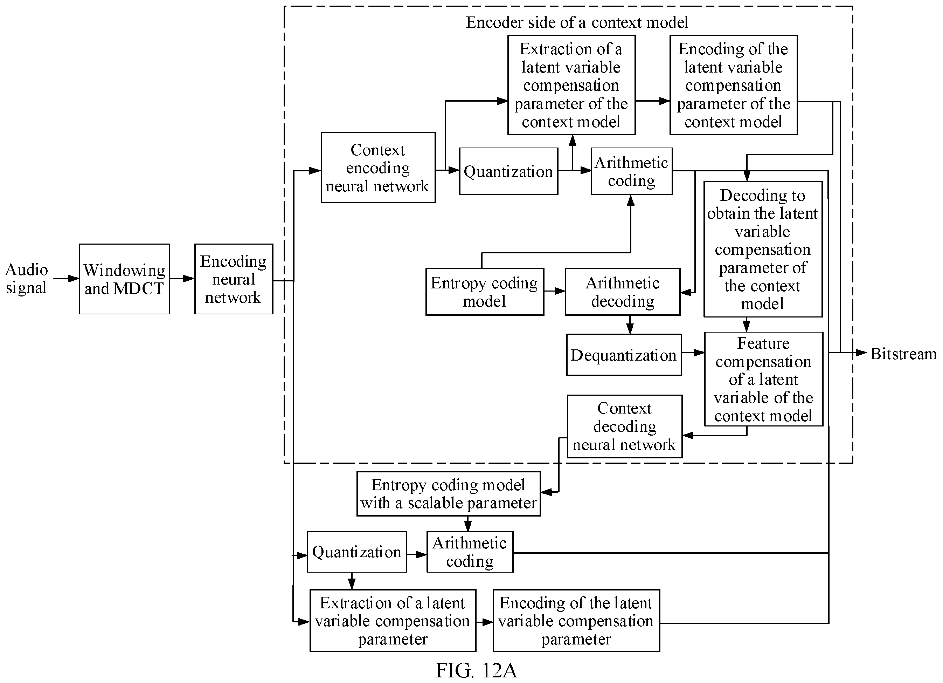

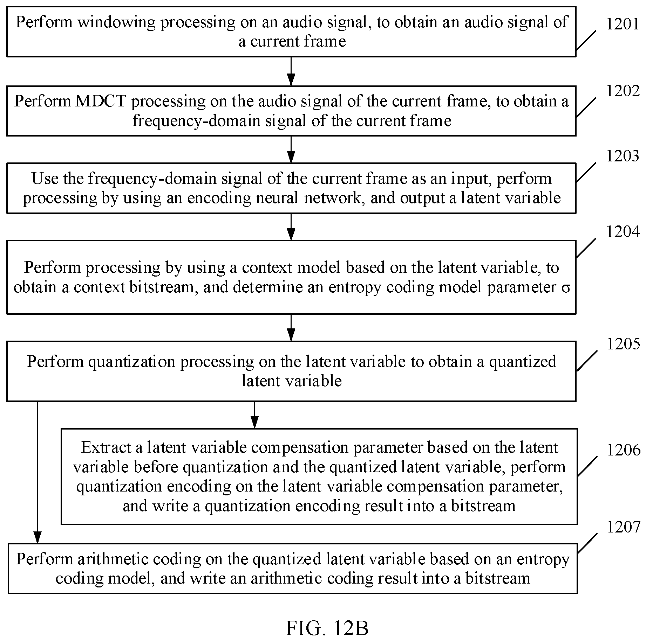

FIG. 12A and FIG. 12B are schematic flowcharts of another audio data encoding method according to an embodiment of this application. The another audio data encoding method (corresponding to an encoder side) may include the following steps.

1201: Perform windowing processing on an audio signal, to obtain an audio signal of a current frame.

1202: Perform MDCT processing on the audio signal of the current frame, to obtain a frequency-domain signal of the current frame.

1203: Use the frequency-domain signal of the current frame as an input, perform processing by using an encoding neural network, and output a latent variable.

1204: Perform processing by using a context model based on the latent variable, to obtain a context bitstream, and determine an entropy coding model parameter σ.

The performing processing by using a context model based on the latent variable, to obtain a context bitstream, and determining an entropy coding model parameter σ may include the following steps 1204a to 1204f.

1204a: Process the latent variable by using a context encoding neural network, to obtain a latent variable of the context model, where the latent variable of the context model represents probability distribution of a latent variable of the encoding network.

1204b: Quantize the latent variable of the context model, perform arithmetic coding on a quantized latent variable of the context model, to obtain the context bitstream, and write the context bitstream into a bitstream.

Dequantization processing is performed on the quantized latent variable of the context model, to obtain a dequantized latent variable of the context model. Alternatively, a latent variable compensation parameter of the context model may be extracted based on the latent variable of the context model before quantization and the dequantized latent variable of the context model.

1204c: Extract the latent variable compensation parameter of the context model based on the latent variable of the context model before quantization and the quantized latent variable of the context model, perform quantization encoding on the latent variable compensation parameter of the context model, and write an encoding result into the bitstream.

1204d: Perform arithmetic decoding based on the context bitstream, and perform dequantization processing, to obtain the dequantized latent variable of the context model.

1204e: Perform decoding to obtain the latent variable compensation parameter of the context model, and compensate for the dequantized latent variable of the context model based on the latent variable compensation parameter of the context model obtained through decoding, to obtain a compensated latent variable of the context model.

1204f: Process the compensated latent variable of the context model by using a context decoding neural network, to obtain the entropy coding model parameter σ.

1205: Perform quantization processing on the latent variable to obtain a quantized latent variable.

1206: Extract a latent variable compensation parameter based on the latent variable before quantization and the quantized latent variable, perform quantization encoding on the latent variable compensation parameter, and write an encoding result into a bitstream.

Dequantization processing is performed on the quantized latent variable to obtain a dequantized latent variable. The latent variable compensation parameter may alternatively be extracted based on the latent variable before quantization and the dequantized latent variable.

1207: Perform arithmetic coding on the quantized latent variable based on an entropy coding model, and write an arithmetic coding result into a bitstream.

An entropy coding model corresponding to the parameter σ is determined from entropy coding models with scalable parameters based on the entropy coding model parameter σ, arithmetic coding is performed on the quantized latent variable based on the entropy coding model corresponding to the parameter σ, and an arithmetic coding result is written to the bitstream.

It can be learned that, in the solution provided in this embodiment of this application, in an application scene in which a context model is included and compensation is also performed on the context model, at the encoder side, the latent variable compensation parameter is obtained based on a quantization error of a latent variable, and the latent variable compensation parameter is encoded and written into the bitstream. After a decoder side obtains the bitstream, it becomes possible to perform, based on the latent variable compensation parameter, compensation processing on a related quantization error caused by quantizing the latent variable by the encoder side. This helps reduce distortion of input data of a decoding neural network, thereby helping improve quality of a final decoded signal. Specifically, for example, this helps reduce a vacancy of decoding an audio signal in frequency domain, and improve subjective auditory quality of a decoded audio signal.

The following describes a related solution at a decoder side corresponding to the solution at the encoder side described in FIG. 12A.

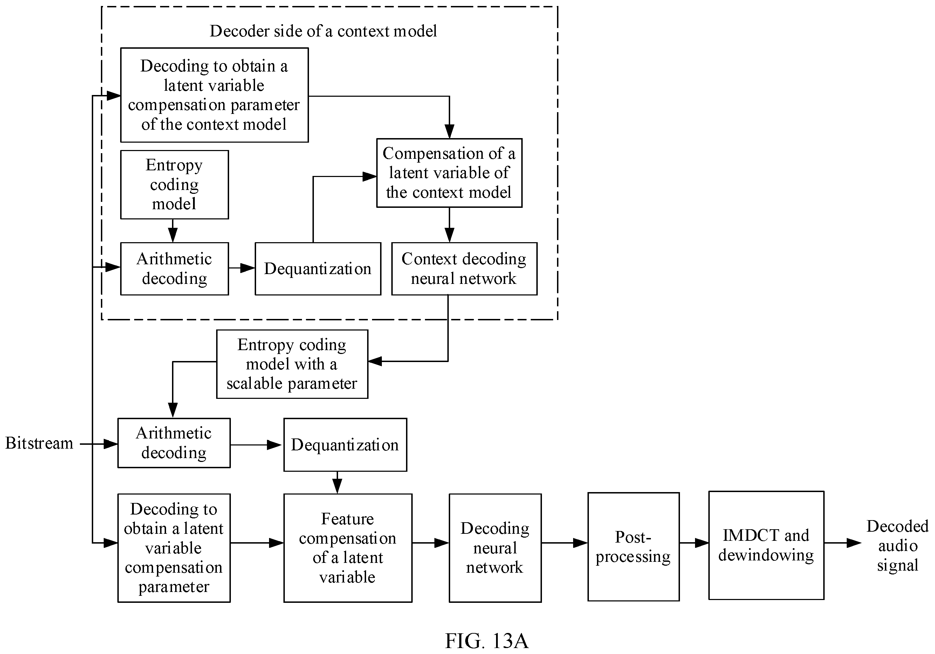

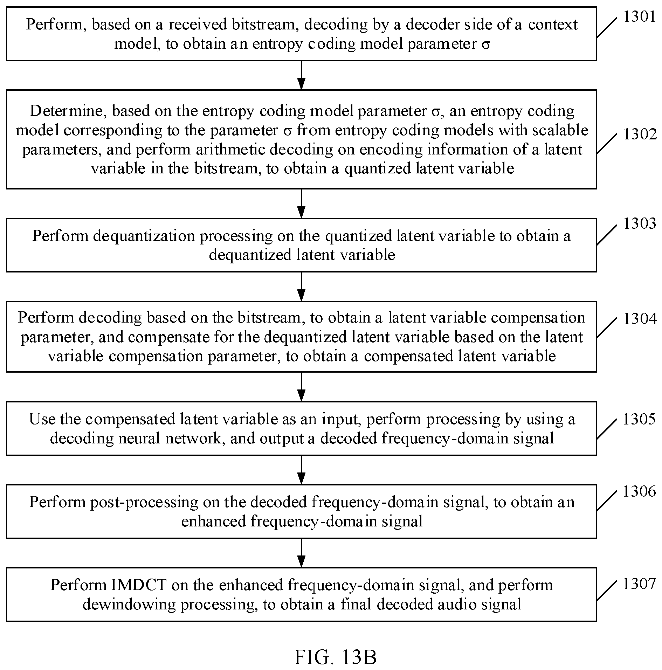

FIG. 13A and FIG. 13B are schematic flowcharts of another audio data decoding method according to an embodiment of this application. The another audio data decoding method (corresponding to the decoder side) may include the following steps.

1301: Perform, based on a received bitstream, decoding by a decoder side of a context model, to obtain an entropy coding model parameter $\sigma$.

The performing, based on a received bitstream, decoding by a decoder side of a context model, to obtain an entropy coding model parameter $\sigma$ may include: performing arithmetic decoding based on the received bitstream, and performing dequantization processing, to obtain a dequantized latent variable of the context model; performing decoding based on the bitstream, to obtain a latent variable compensation parameter of the context model, and compensating for the dequantized latent variable of the context model based on the latent variable compensation parameter of the context model, to obtain a compensated latent variable of the context model; and processing the compensated latent variable of the context model by using a context decoding neural network, to obtain the entropy coding model parameter $\sigma$.

1302: Determine, based on the entropy coding model parameter $\sigma$, an entropy coding model corresponding to the parameter $\sigma$ from entropy coding models with scalable parameters, and perform arithmetic decoding on encoding information of a latent variable in the bitstream to obtain a quantized latent variable.

1303: Perform dequantization processing on the quantized latent variable to obtain a dequantized latent variable.

1304: Perform decoding based on the bitstream, to obtain a latent variable compensation parameter, and compensate for the dequantized latent variable based on the latent variable compensation parameter, to obtain a compensated latent variable.

1305: Use the compensated latent variable as an input, perform processing by using the decoding neural network, and output a decoded frequency-domain signal.

1306: Perform post-processing on the decoded frequency-domain signal, to obtain an enhanced frequency-domain signal.

1307: Perform IMDCT on the enhanced frequency-domain signal, and perform dewindowing processing, to obtain a final decoded audio signal.

It can be learned that, in the solution provided in this embodiment of this application, in an application scene in which a context model is included and compensation is also performed on the context model, at the encoder side, the latent variable compensation parameter is obtained based on a quantization error of a latent variable, and the latent variable compensation parameter is encoded and written into the bitstream. After the decoder side obtains the bitstream, it becomes possible to perform, based on the latent variable compensation parameter, compensation processing on a related quantization error caused by quantizing the latent variable by the encoder side. This helps reduce distortion of input data of a decoding neural network, thereby helping improve quality of a final decoded signal. Specifically, for example, this helps reduce a vacancy of decoding an audio signal in frequency domain, and improve subjective auditory quality of a decoded audio signal.

In general, this application proposes a mechanism for compensating for a feature of a latent variable. An encoder side extracts a latent variable compensation parameter based on a quantization error of the latent variable, encodes the latent variable compensation parameter, and transmits an encoded latent variable compensation parameter to a decoder side. The decoder side performs compensation processing on the latent variable based on the latent variable compensation parameter. This helps reduce distortion of input data of a decoding neural network, thereby helping improve quality of a final decoded signal. Corresponding to the audio codec, for example, this can reduce a vacancy of decoding an audio signal in frequency domain, and improve subjective auditory quality of a decoded audio signal.

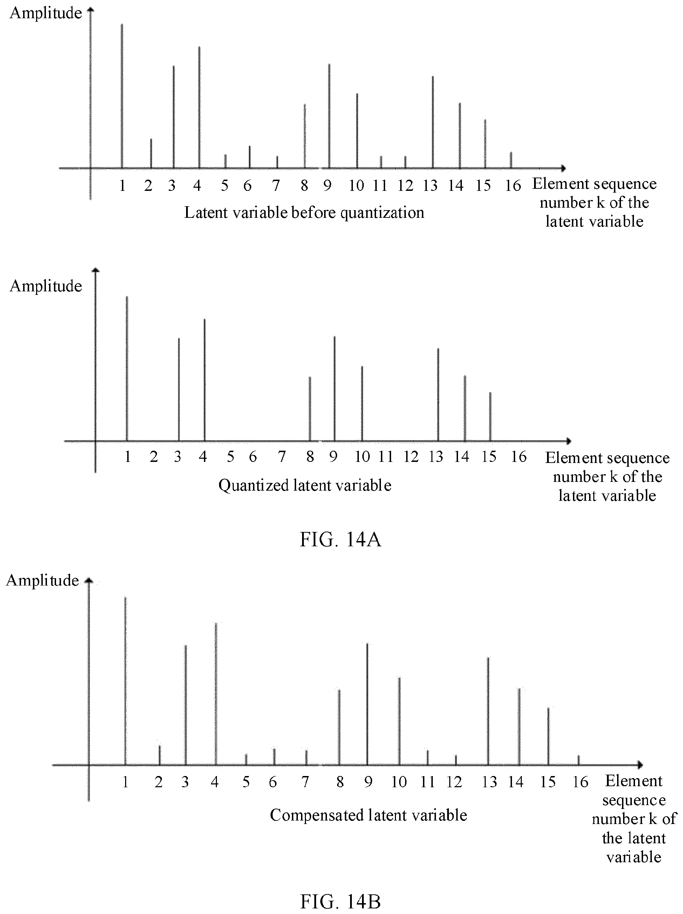

For example, as shown in FIG. 14A, after quantization of a latent variable, quantized values of latent variable amplitudes at some element locations may be zero. For example, quantized values of latent variable amplitudes at locations such as element sequence numbers 2, 5, 6, 7, 11, 12, and 16 in the figure are zero after quantization. For example, as shown in FIG. 14B, after a decoder side compensates for a dequantized latent variable by using the method provided in this embodiment of this application, latent variable amplitudes at locations such as element sequence numbers 2, 5, 6, 7, 11, 12, and 16 are restored to some extent. This reduces distortion of input data of the decoding neural network, thereby improving quality of the final decoded signal.

The following further describes some apparatus embodiments.

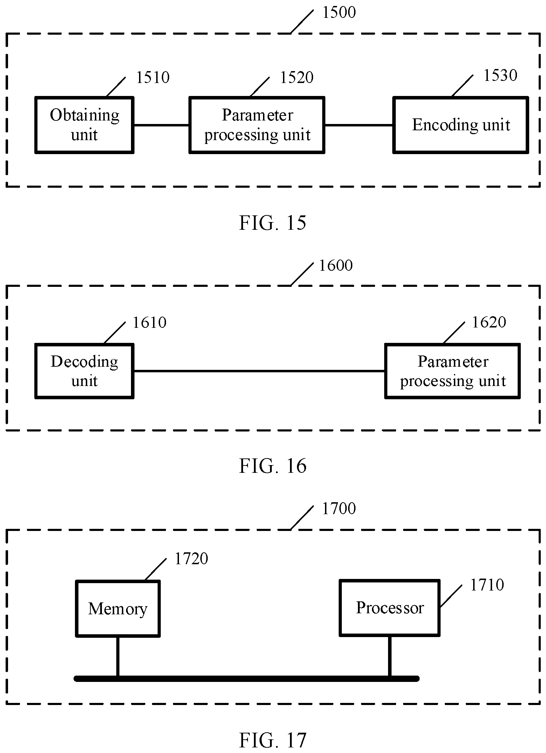

As shown in FIG. 15, an embodiment of this application further provides an audio encoder 1500. The audio encoder may include several functional units, and the several functional units cooperate to implement an audio encoding-related method.

Specifically, for example, the audio encoder may include an obtaining unit 1510, a parameter processing unit 1520, and an encoding unit 1530.

The obtaining unit 1510 is configured to obtain to-be-encoded audio data.

The parameter processing unit 1520 is configured to: process the to-be-encoded audio data by using an encoding neural network, to generate a first latent variable; perform quantization processing on the first latent variable to obtain a second latent variable; and obtain a latent variable compensation parameter based on the first latent variable and the second latent variable.

The encoding unit 1530 is configured to: encode the latent variable compensation parameter, and write an encoding result of the latent variable compensation parameter into a bitstream; and encode the second latent variable, and write an encoding result of the second latent variable into the bitstream.

It may be understood that the audio encoder 1500 may be configured to implement the related method illustrated in FIG. 2, FIG. 4A, FIG. 6A, FIG. 8A, FIG. 10A, FIG. 12A, or the like.

As shown in FIG. 16, an embodiment of this application further provides an audio decoder 1600. The audio decoder 1600 may include several functional units, and the several functional units cooperate to implement an audio decoding-related method.

Specifically, for example, the audio decoder 1600 may include a decoding unit 1610 and a parameter processing unit 1620.

The parameter processing unit 1620 is configured to: obtain a latent variable compensation parameter and a third latent variable based on a bitstream, and perform compensation processing on the third latent variable based on the latent variable compensation parameter, to obtain a reconstructed first latent variable.

The decoding unit 1610 is configured to process the reconstructed first latent variable by using a decoding neural network, to generate decoded audio data.

The obtaining a latent variable compensation parameter and a third latent variable based on a bitstream may include: decoding the bitstream to obtain the latent variable compensation parameter and a second latent variable, where a value of a current element in the second latent variable is a quantized value; and performing dequantization processing on the second latent variable to obtain the third latent variable.

It may be understood that the audio decoder 1600 may be configured to implement the related method illustrated in FIG. 3, FIG. 5, FIG. 7, FIG. 9A, FIG. 11A, FIG. 13A, or the like.

As shown in FIG. 17, an embodiment of this application further provides an audio encoder 1700, including a processor 1710. The processor is coupled to a memory 1720, and the memory stores a program. When program instructions stored in the memory are executed by the processor, some or all steps of any audio encoding-related method provided in embodiments of this application are implemented.

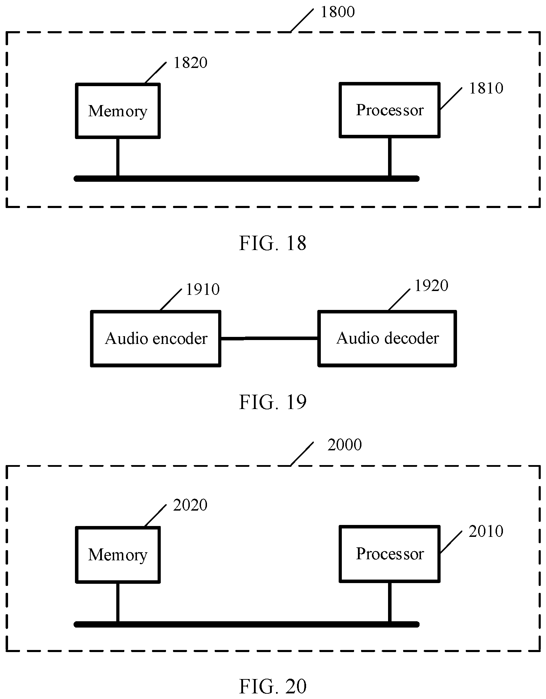

As shown in FIG. 18, an embodiment of this application further provides an audio decoder 1800 that may include a processor 1810. The processor is coupled to a memory 1820, and the memory stores a program. When program instructions stored in the memory are executed by the processor, some or all steps of any audio decoding-related method provided in embodiments of this application are implemented.

The processor in this embodiment of this application is also referred to as a central processing unit (Central Processing Unit, CPU). In a specific application, components of the audio encoder/decoder are coupled together, for example, by using a bus system. The bus system may further include a power bus, a control bus, a status signal bus, and the like, in addition to a data bus. Any method disclosed in the foregoing embodiments of this application may be applied to a processor, or implemented by a processor. The processor may be an integrated circuit chip with a signal processing capability. In some implementation processes, some or all steps of the foregoing methods may be implemented by using an integrated logic circuit of hardware in the processor or instructions in a form of software. The processor may be a general-purpose processor, a digital signal processor, an application-specific integrated circuit, a field-programmable gate array or another programmable logic device, a discrete gate or a transistor logic device, or a discrete hardware component. The processor may implement or perform methods, steps, and logical block diagrams disclosed in embodiments of this application. The general-purpose processor may be a microprocessor, or the processor may be any conventional processor, or the like. For example, the steps of the methods disclosed with reference to embodiments of this application may be directly performed and accomplished by a hardware coding processor, or may be performed and accomplished by using a combination of hardware and a software module in a coding processor. The software module may be located in a mature storage medium in the art, for example, a random access memory, a flash memory, a read-only memory, a programmable read-only memory, an electrically erasable programmable memory, or a register. The storage medium is located in a memory. For example, the processor may read information in the memory, and implement some or all steps of the foregoing methods in combination with hardware of the processor.

As shown in FIG. 19, an embodiment of this application further provides a communication system, including an audio encoder 1910 and an audio decoder 1920. The audio encoder is any audio encoder provided in embodiments of this application. The audio decoder is any audio decoder provided in embodiments of this application.

As shown in FIG. 20, an embodiment of this application further provides a network device 2000. The network device 2000 includes a processor 2010 and a memory 2020. The processor 2010 is coupled to the memory 2020, and is configured to read and execute a program stored in the memory, to implement some or all steps of any method provided in embodiments of this application.

The network device may be, for example, a chip or a system-on-a-chip.

It may be understood that for specific details of implementing a related function by the foregoing apparatus, refer to the description of the foregoing method embodiment. Details are not described herein again.

An embodiment of this application further provides a computer-readable storage medium. The computer-readable storage medium stores a computer program. When the computer program is executed by hardware (such as a processor), some or all steps of any method in embodiments of this application can be implemented.

An embodiment of this application further provides a computer-readable storage medium. The computer-readable storage medium stores a computer program. The computer program is executed by hardware (for example, a processor), to implement some or all steps of any method performed by any device in embodiments of this application.

An embodiment of this application provides a computer-readable storage medium, storing a bitstream. The bitstream is obtained based on any audio data encoding method provided in embodiments of this application.

An embodiment of this application further provides a computer program product including instructions. When the computer program product runs on a computer device, the computer device is enabled to perform some or all steps of any method in embodiments of this application.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, an optical disc), a semiconductor medium (for example, a solid-state drive), or the like. In the foregoing embodiments, the description of each embodiment has respective focuses. For a part that is not described in detail in an embodiment, refer to related description in another embodiment.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual indirect couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one location, or may be distributed on a plurality of network units. Some or all of the units may be selected based on actual needs to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When being implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium may include, for example, any medium that can store program code, such as a USB flash drive, a removable hard disk, a read-only memory (Read-Only Memory, ROM), a random access memory (Random Access Memory, RAM), a magnetic disk, or an optical disc.

**Claims**

1. An audio data encoding method, comprising:

   obtaining (201) to-be-encoded audio data;
   processing (202) the to-be-encoded audio data by using an encoding neural network, to generate a first latent variable;
   performing (203) quantization processing on the first latent variable to obtain a second latent variable;

obtaining (204) a latent variable compensation parameter based on the first latent variable and the second latent variable;

encoding (205) the latent variable compensation parameter, and writing an encoding result of the latent variable compensation parameter into a bitstream; and

encoding (206) the second latent variable, and writing an encoding result of the second latent variable into the bitstream;

wherein the obtaining a latent variable compensation parameter based on the first latent variable and the second latent variable comprises:

determining an element that is in a third latent variable and that meets a preset condition, wherein the third latent variable is obtained by performing dequantization processing on the second latent variable;

obtaining, based on the first latent variable and the third latent variable, a quantization error of the element that meets the preset condition; and

obtaining the latent variable compensation parameter based on the quantization error.

2. The method according to claim 1, wherein the third latent variable comprises a first element; and

the meeting a preset condition comprises: a value of the first element is less than or equal to a preset value, wherein the value of the first element is a dequantized value when the first element is an element in the third latent variable.

3. The method according to claim 1, wherein

the obtaining, based on the first latent variable and the third latent variable, a quantization error of the element that meets the preset condition comprises: determining a quantization error of a first element based on a first value of the first element in the first latent variable and a third value of the first element in the third latent variable.

4. An audio data decoding method, comprising:

obtaining (301-302, 501-502, 701-702) a latent variable compensation parameter and a third latent variable based on a bitstream, and performing compensation processing on the third latent variable based on the latent variable compensation parameter, to obtain a reconstructed first latent variable; and

processing (304, 504, 704) the reconstructed first latent variable by using a decoding neural network, to generate decoded audio data; wherein

the obtaining a latent variable compensation parameter and a third latent variable based on a bitstream comprises: decoding the bitstream to obtain the latent variable compensation parameter and a second latent variable (301, 501, 701), wherein a value of a current element in the second latent variable is a quantized value; and performing dequantization processing (302, 502, 702) on the second latent variable to obtain the third latent variable.

5. The method according to claim 4, wherein

the performing compensation processing on the third latent variable based on the latent variable compensation parameter, to obtain a reconstructed first latent variable comprises: determining, based on the second latent variable or the third latent variable, an element that is in the third latent variable and that meets a preset condition; and performing, based on the latent variable compensation parameter, compensation processing on the element that is in the third latent variable and that meets the preset condition, to obtain the reconstructed first latent variable.

6. The method according to claim 5, wherein the performing, based on the latent variable compensation parameter, compensation processing on the element that is in the third latent variable and that meets the preset condition, to obtain the reconstructed first latent variable comprises:

generating random noise;

performing amplitude or energy adjustment on the generated random noise based on the latent variable compensation parameter, to obtain amplitude-adjusted or energy-adjusted random noise; and

performing, based on the amplitude-adjusted or energy-adjusted random noise, compensation processing on the element that is in the third latent variable and that meets the preset condition, to obtain the reconstructed first latent variable.

7. The method according to claim 5 or 6, wherein the determining, based on the second latent variable or the third latent variable, an element that is in the third latent variable and that meets a preset condition comprises:

determining an element that is in the second latent variable and that meets the preset condition, wherein

the element that is in the third latent variable and that meets the preset condition is in a location correspondence to the element that is in the second latent variable and that meets the preset condition.

8. An audio encoder, comprising a processor, wherein the processor is coupled to a memory, the memory stores a program, and when program instructions stored in the memory are executed by the processor, the method according to any one of claims 1 to 3 is implemented.

9. An audio decoder, comprising a processor, wherein the processor is coupled to a memory, the memory stores a program, and when program instructions stored in the memory are executed by the processor, the method according to any one of claims 4 to 7 is implemented.

10. A communication system, comprising an audio encoder and an audio decoder, wherein the audio encoder is the audio encoder according to claim 8, and the audio decoder is the audio decoder according to claim 9.

11. A computer-readable storage medium, comprising a program, wherein when the program is run on a computer, the computer is enabled to perform the method according to any one of claims 1 to 7.

12. An audio encoder according to claim 8, wherein the audio encoder is a network device.

13. An audio decoder according to claim 9, wherein the audio decoder is a network device.

14. An audio encoder according to claim 12 or an audio decoder according to claim 13, wherein the network device is a chip or a system-on-a-chip.

**Patentansprüche**

1. Audiodatencodierungsverfahren, umfassend:

> Erlangen (201) zu codierender Audiodaten;
> Verarbeiten (202) der zu codierenden Audiodaten unter Verwendung eines neuronalen Codierungsnetzes, um eine erste latente Variable zu erzeugen;
> Durchführen (203) einer Quantisierungsverarbeitung an der ersten latenten Variable, um eine zweite latente Variable zu erlangen;
> Erlangen (204) eines Kompensationsparameters für die latente Variable basierend auf der ersten latenten Variable und der zweiten latenten Variable;
> Codieren (205) des Kompensationsparameters für die latente Variable und Schreiben eines Codierungsergebnisses des Kompensationsparameters für die latente Variable in einen Bitstrom; und
Codieren (206) der zweiten latenten Variable und Schreiben eines Codierungsergebnisses der zweiten latenten Variable in den Bitstrom;
wobei das Erlangen eines Kompensationsparameters für die latente Variable basierend auf der ersten latenten Variable und der zweiten latenten Variable Folgendes umfasst:

> Bestimmen eines Elements, das in einer dritten latenten Variable enthalten ist und das eine vorgegebene Bedingung erfüllt, wobei die dritte latente Variable durch Durchführen einer Dequantisierungsverarbeitung an der zweiten latenten Variable erlangt wird;
> Erlangen, basierend auf der ersten latenten Variable und der dritten latenten Variable, eines Quantisierungsfehlers des Elements, das die vorgegebene Bedingung erfüllt; und
> Erlangen des Kompensationsparameters für die latente Variable basierend auf dem Quantisierungsfehler.

2. Verfahren nach Anspruch 1, wobei die dritte latente Variable ein erstes Element umfasst; und
das Erfüllen einer vorgegebenen Bedingung Folgendes umfasst: ein Wert des ersten Elements ist kleiner als oder gleich einem vorgegebenen Wert, wobei der Wert des ersten Elements ein dequantisierter Wert ist, wenn das erste Element ein Element ist, das in der dritten latenten Variable enthalten ist.

3. Verfahren nach Anspruch 1, wobei
das Erlangen, basierend auf der ersten und der dritten latenten Variable, eines Quantisierungsfehlers des Elements, das die vorgegebene Bedingung erfüllt, Folgendes umfasst: Bestimmen eines Quantisierungsfehlers eines ersten Elements basierend auf einem ersten Wert des ersten Elements in der ersten latenten Variable und einem dritten Wert des ersten Elements in der dritten latenten Variable.

4. Audiodatendecodierungsverfahren, umfassend:

> Erlangen (301-302, 501-502, 701-702) eines Kompensationsparameters für die latente Variable und einer dritten latenten Variable basierend auf einem Bitstrom und Durchführen einer Kompensationsverarbeitung an der dritten latenten Variable basierend auf dem Kompensationsparameter für die latente Variable, um eine rekonstruierte erste latente Variable zu erlangen; und
> Verarbeiten (304, 504, 704) der rekonstruierten ersten latenten Variable unter Verwendung eines neuronalen Decodierungsnetzes, um decodierte Audiodaten zu erzeugen;

wobei das Erlangen eines Kompensationsparameters für die latente Variable und einer dritten latenten Variable basierend auf einem Bitstrom Folgendes umfasst: Decodieren des Bitstroms, um den Kompensationsparameter für die latente Variable und eine zweite latente Variable (301, 501, 701) zu erlangen, wobei ein Wert eines aktuellen Elements in der zweiten latenten Variable ein quantisierter Wert ist; und Durchführen einer Dequantisierungsverarbeitung (302, 502, 702) an der zweiten latenten Variable, um die dritte latente Variable zu erlangen.

5. Verfahren nach Anspruch 4, wobei
das Durchführen der Kompensationsverarbeitung an der dritten latenten Variable basierend auf dem Kompensationsparameter für die latente Variable, um eine rekonstruierte erste latente Variable zu erlangen, Folgendes umfasst: Bestimmen, basierend auf der zweiten latenten Variable oder der dritten latenten Variable, eines Elements, das in der dritten latenten Variable enthalten ist und das eine vorgegebene Bedingung erfüllt; und Durchführen, basierend auf dem Kompensationsparameter für die latente Variable, einer Kompensationsverarbeitung an dem Element, das in der dritten latenten Variable enthalten ist und das die vorgegebene Bedingung erfüllt, um die rekonstruierte erste latente Variable zu erlangen.

6. Verfahren nach Anspruch 5, wobei das Durchführen, basierend auf dem Kompensationsparameter für die latente Variable, der Kompensationsverarbeitung an dem Element, das in der dritten latenten Variable enthalten ist und das die vorgegebene Bedingung erfüllt, um die rekonstruierte erste latente Variable zu erlangen, Folgendes umfasst:

Erzeugen von Zufallsrauschen;
Durchführen einer Ampliduten- oder Energieanpassung an dem erzeugten Zufallsrauschen basierend auf dem Kompensationsparameter für die latente Variable, um amplitudenangepasstes oder energieangepasstes Zufallsrauschen zu erlangen; und
Durchführen, basierend auf dem amplitudenangepassten oder energieangepassten Zufallsrauschen, einer Kompensationsverarbeitung an dem Element, das in der dritten latenten Variable enthalten ist und das die vorgegebene Bedingung erfüllt, um die rekonstruierte erste latente Variable zu erlangen.

7. Verfahren nach Anspruch 5 oder 6, wobei das Bestimmen, basierend auf der zweiten latenten Variable oder der dritten latenten Variable, eines Elements, das in der dritten latenten Variable enthalten ist und das eine vorgegebene Bedingung erfüllt, Folgendes umfasst:
Bestimmen eines Elements, das in der zweiten latenten Variable enthalten ist und das die vorgegebene Bedingung erfüllt, wobei das Element, das in der dritten latenten Variable enthalten ist und das die vorgegebene Bedingung erfüllt, in einer Positionsübereinstimmung mit dem Element steht, das in der zweiten latenten Variable enthalten ist und das die vorgegebene Bedingung erfüllt.

8. Audiocodierer, umfassend einen Prozessor, wobei der Prozessor mit einem Speicher gekoppelt ist, der Speicher ein Programm speichert und, wenn Programmanweisungen, die in dem Speicher gespeichert sind, durch den Prozessor ausgeführt werden, das Verfahren nach einem der Ansprüche 1 bis 3 umgesetzt wird.

9. Audiodecodierer, umfassend einen Prozessor, wobei der Prozessor mit einem Speicher gekoppelt ist, der Speicher ein Programm speichert und, wenn Programmanweisungen, die in dem Speicher gespeichert sind, durch den Prozessor ausgeführt werden, das Verfahren nach einem der Ansprüche 4 bis 7 umgesetzt wird.

10. Kommunikationssystem, umfassend einen Audiocodierer und einen Audiodecodierer, wobei der Audiocodierer der Audiocodierer nach Anspruch 8 ist und der Audiodecodierer der Audiodecodierer nach Anspruch 9 ist.

11. Computerlesbares Speichermedium, umfassend ein Programm, wobei, wenn das Programm auf einem Computer läuft, der Computer in die Lage versetzt wird, das Verfahren nach einem der Ansprüche 1 bis 7 durchzuführen.

12. Audiocodierer nach Anspruch 8, wobei der Audiocodierer ein Netzgerät ist.

13. Audiodecodierer nach Anspruch 9, wobei der Audiodecodierer ein Netzgerät ist.

14. Audiocodierer nach Anspruch 12 oder Audiodecodierer nach Anspruch 13, wobei das Netzgerät ein Chip oder ein System-on-a-Chip ist.

**Revendications**

1. Procédé de codage de données audio, comprenant :

l'obtention (201) de données audio à coder ;
le traitement (202) des données audio à coder à l'aide d'un réseau neuronal de codage, pour générer une première variable latente ;
la réalisation (203) d'un traitement de quantification sur la première variable latente pour obtenir une deuxième variable latente ;

l'obtention (204) d'un paramètre de compensation de variable latente sur la base de la première variable latente et de la deuxième variable latente ;

le codage (205) du paramètre de compensation de variable latente et l'écriture d'un résultat de codage du paramètre de compensation de variable latente dans un flux binaire ; et

le codage (206) de la deuxième variable latente et l'écriture d'un résultat de codage de la deuxième variable latente dans le flux binaire ;

dans lequel l'obtention d'un paramètre de compensation de variable latente sur la base de la première variable latente et de la deuxième variable latente comprend :

la détermination d'un élément qui se trouve dans une troisième variable latente et qui satisfait à une condition prédéfinie, dans lequel la troisième variable latente est obtenue en réalisant un traitement de déquantification sur la deuxième variable latente ;

l'obtention, sur la base de la première variable latente et de la troisième variable latente, d'une erreur de quantification de l'élément qui satisfait à la condition prédéfinie ; et

l'obtention du paramètre de compensation de variable latente sur la base de l'erreur de quantification.

2. Procédé selon la revendication 1, dans lequel la troisième variable latente comprend un premier élément ; et

la satisfaction d'une condition prédéfinie comprend : une valeur du premier élément est inférieure ou égale à une valeur prédéfinie, dans lequel la valeur du premier élément est une valeur déquantifiée lorsque le premier élément est un élément dans la troisième variable latente.

3. Procédé selon la revendication 1, dans lequel l'obtention, sur la base de la première variable latente et de la troisième variable latente, d'une erreur de quantification de l'élément qui satisfait à la condition prédéfinie comprend : la détermination d'une erreur de quantification d'un premier élément sur la base d'une première valeur du premier élément dans la première variable latente et d'une troisième valeur du premier élément dans la troisième variable latente.

4. Procédé de décodage de données audio, comprenant :

l'obtention (301-302, 501-502, 701-702) d'un paramètre de compensation de variable latente et d'une troisième variable latente sur la base d'un flux binaire, et la réalisation d'un traitement de compensation sur la troisième variable latente sur la base du paramètre de compensation de variable latente, pour obtenir une première variable latente reconstruite ; et

le traitement (304, 504, 704) de la première variable latente reconstruite à l'aide d'un réseau neuronal de décodage, pour générer des données audio décodées ;

dans lequel

l'obtention d'un paramètre de compensation de variable latente et d'une troisième variable latente sur la base d'un flux binaire comprend : le décodage du flux binaire pour obtenir le paramètre de compensation de variable latente et une deuxième variable latente (301, 501, 701), dans lequel une valeur d'un élément actuel dans la deuxième variable latente est une valeur quantifiée ; et la réalisation d'un traitement de déquantification (302, 502, 702) sur la deuxième variable latente pour obtenir la troisième variable latente.

5. Procédé selon la revendication 4, dans lequel la réalisation d'un traitement de compensation sur la troisième variable latente sur la base du paramètre de compensation de variable latente, pour obtenir une première variable latente reconstruite, comprend : la détermination, sur la base de la deuxième variable latente ou de la troisième variable latente, d'un élément qui se trouve dans la troisième variable latente et qui satisfait à une condition prédéfinie ; et la réalisation, sur la base du paramètre de compensation de variable latente, d'un traitement de compensation sur l'élément qui se trouve dans la troisième variable latente et qui satisfait à la condition prédéfinie, pour obtenir la première variable latente reconstruite.

6. Procédé selon la revendication 5, dans lequel la réalisation, sur la base du paramètre de compensation de variable latente, d'un traitement de compensation sur l'élément qui se trouve dans la troisième variable latente et qui satisfait à la condition prédéfinie, pour obtenir la première variable latente reconstruite, comprend :

la génération d'un bruit aléatoire ;

la réalisation d'un ajustement d'amplitude ou d'énergie sur le bruit aléatoire généré sur la base du paramètre de compensation de variable latente, pour obtenir un bruit aléatoire ajusté en amplitude ou ajusté en énergie ; et

la réalisation, sur la base du bruit aléatoire ajusté en amplitude ou ajusté en énergie, d'un traitement de compensation sur l'élément qui se trouve dans la troisième variable latente et qui satisfait à la condition prédéfinie, pour obtenir la première variable latente reconstruite.

7. Procédé selon la revendication 5 ou 6, dans lequel la détermination, sur la base de la deuxième variable latente ou de la troisième variable latente, d'un élément qui se trouve dans la troisième variable latente et qui satisfait à une condition prédéfinie, comprend :

la détermination d'un élément qui se trouve dans la deuxième variable latente et qui satisfait à la condition prédéfinie, dans lequel
l'élément qui se trouve dans la troisième variable latente et qui satisfait à la condition prédéfinie se trouve à un emplacement correspondant à l'élément qui se trouve dans la deuxième variable latente et qui satisfait à la condition prédéfinie.

8. Codeur audio, comprenant un processeur, dans lequel le processeur est couplé à une mémoire, la mémoire stocke un programme, et lorsque les instructions de programme stockées dans la mémoire sont exécutées par le processeur, le procédé selon l'une quelconque des revendications 1 à 3 est mis en œuvre.

9. Décodeur audio, comprenant un processeur, dans lequel le processeur est couplé à une mémoire, la mémoire stocke un programme, et lorsque les instructions de programme stockées dans la mémoire sont exécutées par le processeur, le procédé selon l'une quelconque des revendications 4 à 7 est mis en œuvre.

10. Système de communication, comprenant un codeur audio et un décodeur audio, dans lequel le codeur audio est le codeur audio selon la revendication 8 et le décodeur audio est le décodeur audio selon la revendication 9.

11. Support de stockage lisible par ordinateur, comprenant un programme, dans lequel lorsque le programme fonctionne sur un ordinateur, l'ordinateur est activé pour réaliser le procédé selon l'une quelconque des revendications 1 à 7.

12. Codeur audio selon la revendication 8, dans lequel le codeur audio est un dispositif réseau.

13. Décodeur audio selon la revendication 9, dans lequel le décodeur audio est un dispositif réseau.

14. Codeur audio selon la revendication 12 ou décodeur audio selon la revendication 13, dans lequel le dispositif réseau est une puce ou un système sur puce.

FIG. 1A

FIG. 1B

Wireless or wired network device

| Channel decoder | Another audio decoder | Audio encoder of this application | Channel encoder |

FIG. 1C

Wireless or wired network device

| Channel decoder | Audio decoder of this application | Another audio encoder | Channel encoder |

FIG. 1D

FIG. 1E

```
Live          ┌──────────────┐   ┌──────────────┐      ╭───────────╮       ┌──────────────────────────┐
broadcast      │ Live-program │   │    Three-    │     ╱ Radio and   ╲      │      Set-top box         │
scene          │three-dimensional│ │ dimensional │─▶  │  television   │ ─▶ │ ┌──────────────────────┐ │
               │sound production│  │    sound     │    ╲   network   ╱      │ │  Three-dimensional   │ │
               └──────────────┘   │   encoding    │     ╰───────────╯       │ │   sound decoding     │ │
                                   └──────────────┘                         │ └──────────────────────┘ │
                                                                            └──────────────────────────┘
```

FIG. 1F

Obtain to-be-encoded audio data  ⟋ 201

Process the to-be-encoded audio data by using an encoding neural network, to generate a first latent variable  ⟋ 202

Perform quantization processing on the first latent variable to obtain a second latent variable  ⟋ 203

Obtain a latent variable compensation parameter based on the first latent variable and the second latent variable  ⟋ 204

Encode the latent variable compensation parameter, and write an encoding result of the latent variable compensation parameter into a bitstream  ⟋ 205

Encode the second latent variable, and write an encoding result of the second latent variable into a bitstream  ⟋ 206

FIG. 2

Decode a bitstream to obtain a latent variable compensation parameter and a second latent variable, where a value of a current element in the second latent variable is a quantized value  ⟋ 301

Perform dequantization processing on the second latent variable to obtain a third latent variable  ⟋ 302

Perform compensation processing on the third latent variable based on the latent variable compensation parameter, to obtain a reconstructed first latent variable  ⟋ 303

Process the reconstructed first latent variable by using a decoding neural network, to generate decoded audio data  ⟋ 304

FIG. 3

An audio encoder obtains to-be-encoded audio data — 401

The audio encoder processes the to-be-encoded audio data by using a convolutional neural network, to generate a first latent variable — 402

The audio encoder quantizes the latent variable to obtain a second latent variable — 403

The audio encoder obtains a latent variable compensation parameter based on the first latent variable and the second latent variable — 404

The audio encoder encodes the latent variable compensation parameter, and writes an encoding result of the latent variable compensation parameter into a bitstream — 405

The audio encoder encodes the second latent variable, and writes an encoding result of the second latent variable into a bitstream — 406

FIG. 4A

| Channel 1 | $L_{1,1}$ | $L_{1,2}$ | $L_{1,3}$ | ... | $L_{1,M-1}$ | $L_{1,M}$ |
|-----------|-----------|-----------|-----------|-----|-------------|-----------|
| Channel 2 | $L_{2,1}$ | $L_{2,2}$ | $L_{2,3}$ | ... | $L_{2,M-1}$ | $L_{1,M}$ |
| ⋮ | ⋮ | ⋮ | ⋮ | ⋮ | ⋮ | ⋮ |
| Channel n | $L_{n,1}$ | $L_{n,2}$ | $L_{n,3}$ | ... | $L_{n,M-1}$ | $L_{n,M}$ |

FIG. 4B

**EP 4 336 498 B1**

An audio decoder decodes a bitstream to obtain a latent variable compensation parameter and a second latent variable, where a value of a current element in the second latent variable is a quantized value — 501

The audio decoder performs dequantization processing on the second latent variable to obtain a third latent variable — 502

The audio decoder performs compensation processing on the third latent variable based on the latent variable compensation parameter, to obtain a reconstructed first latent variable — 503

The audio decoder processes the reconstructed first latent variable by using a convolutional neural network, to generate decoded audio data — 504

FIG. 5

41

An audio encoder obtains a to-be-encoded audio signal    601

The audio encoder processes the to-be-encoded audio data by using a fully connected network, to generate a first latent variable    602

The audio encoder quantizes the latent variable to obtain a second latent variable    603

The audio encoder obtains a latent variable compensation parameter based on the first latent variable and the second latent variable    604

The audio encoder encodes the latent variable compensation parameter, and writes an encoding result of the latent variable compensation parameter into a bitstream    605

The audio encoder encodes the second latent variable, and writes an encoding result of the second latent variable into a bitstream    606

FIG. 6A

| $L_1$ | $L_2$ | $L_3$ | ... | $L_{M-1}$ | $L_M$ |
|-------|-------|-------|-----|-----------|-------|

FIG. 6B

An audio decoder decodes a bitstream to obtain a latent variable compensation parameter and a second latent variable, where a value of a current element in the second latent variable is a quantized value ⟋ 701

The audio decoder performs dequantization processing on the second latent variable to obtain a third latent variable ⟋ 702

The audio decoder performs compensation processing on the third latent variable based on the latent variable compensation parameter, to obtain a reconstructed first latent variable ⟋ 703

The audio decoder processes the reconstructed first latent variable by using a fully connected network, to generate decoded audio data ⟋ 704

FIG. 7

Audio signal → Windowing and MDCT → Encoding neural network →

**Encoder side of a context model**

Context encoding neural network → Quantization → Arithmetic coding →

Entropy coding model → Arithmetic decoding ←

Dequantization

→ Bitstream

Context decoding neural network

Entropy coding model with a scalable parameter

Quantization → Arithmetic coding →

Extraction of a latent variable compensation parameter → Encoding of the latent variable compensation parameter →

FIG. 8A

EP 4 336 498 B1

An audio encoder performs windowing processing on an audio signal, to obtain an audio signal of a current frame — 801

The audio encoder performs MDCT processing on the audio signal of the current frame, to obtain a frequency-domain signal of the current frame — 802

The audio encoder processes the frequency-domain signal of the current frame by using an encoding neural network, to output a first latent variable — 803

The audio encoder processes the first latent variable by using a context model, to obtain a context bitstream, and determines an entropy coding model parameter σ — 804

Perform quantization processing on the first latent variable to obtain a second latent variable — 805

Perform arithmetic coding on the quantized latent variable based on an entropy coding model, and write an arithmetic coding result into a bitstream — 806

FIG. 8B

FIG. 9A

An audio decoder performs, based on a received bitstream, decoding by a decoder side of a context model, to obtain an entropy coding model parameter σ /901

Determine, based on the entropy coding model parameter σ, an entropy coding model corresponding to the parameter σ from entropy coding models with scalable parameters, and perform arithmetic decoding on encoding information of a latent variable in the bitstream, to obtain a quantized latent variable /902

Perform dequantization processing on the quantized latent variable to obtain a dequantized latent variable /903

Perform decoding based on the bitstream, to obtain a latent variable compensation parameter, and compensate for the dequantized latent variable based on the latent variable compensation parameter, to obtain a compensated latent variable /904

Use the compensated latent variable as an input, perform processing by using a decoding neural network, and output a decoded frequency-domain signal /905

Perform post-processing on the decoded frequency-domain signal, to obtain an enhanced frequency-domain signal /906

Perform IMDCT on the enhanced frequency-domain signal, and perform dewindowing processing, to obtain a final decoded audio signal /907

FIG. 9B

Audio signal → Windowing and MDCT → Encoding neural network → Quantization → Arithmetic coding

Entropy coding model → Arithmetic coding

Quantization → Extraction of a latent variable compensation parameter → Encoding of the latent variable compensation parameter → Bitstream

FIG. 10A

An audio encoder performs windowing processing on an audio signal, to obtain an audio signal of a current frame /1001

The audio encoder performs MDCT processing on the audio signal of the current frame, to obtain a frequency-domain signal of the current frame /1002

The audio encoder uses the frequency-domain signal of the current frame as an input, performs processing by using an encoding neural network, and outputs a first latent variable /1003

The audio encoder performs quantization processing on the first latent variable to obtain a second latent variable /1004

The audio encoder extracts a latent variable compensation parameter based on the first latent variable and the second latent variable /1005

The audio encoder performs quantization encoding on the latent variable compensation parameter, and writes a quantization encoding result into a bitstream /1006

The audio encoder performs arithmetic coding on the quantized latent variable based on an entropy coding model, and writes an arithmetic coding result into the bitstream /1007

FIG. 10B

FIG. 11A

An audio decoder performs arithmetic decoding on a bitstream based on an entropy coding model, to obtain a second latent variable — 1101

The audio decoder performs dequantization processing on a quantized latent variable to obtain a third latent variable — 1102

The audio decoder performs decoding based on the bitstream, to obtain a latent variable compensation parameter, and compensates for the third latent variable based on the latent variable compensation parameter, to obtain a compensated latent variable — 1103

The audio decoder uses the compensated latent variable as an input, performs processing by using a decoding neural network, and outputs a decoded frequency-domain signal — 1104

The audio decoder performs post-processing on the decoded frequency-domain signal, to obtain an enhanced frequency-domain signal — 1105

The audio decoder performs IMDCT on the enhanced frequency-domain signal, and performs dewindowing processing, to obtain a final decoded audio signal — 1106

FIG. 11B

FIG. 12A

Encoder side of a context model

Audio signal → Windowing and MDCT → Encoding neural network → Context encoding neural network → Quantization → Arithmetic coding

Extraction of a latent variable compensation parameter of the context model → Encoding of the latent variable compensation parameter of the context model

Decoding to obtain the latent variable compensation parameter of the context model

Entropy coding model → Arithmetic decoding → Dequantization → Feature compensation of a latent variable of the context model

Context decoding neural network

Entropy coding model with a scalable parameter

Quantization → Arithmetic coding

Extraction of a latent variable compensation parameter → Encoding of the latent variable compensation parameter

→ Bitstream

EP 4 336 498 B1

Perform windowing processing on an audio signal, to obtain an audio signal of a current frame  ⟋ 1201

Perform MDCT processing on the audio signal of the current frame, to obtain a frequency-domain signal of the current frame  ⟋ 1202

Use the frequency-domain signal of the current frame as an input, perform processing by using an encoding neural network, and output a latent variable  ⟋ 1203

Perform processing by using a context model based on the latent variable, to obtain a context bitstream, and determine an entropy coding model parameter σ  ⟋ 1204

Perform quantization processing on the latent variable to obtain a quantized latent variable  ⟋ 1205

Extract a latent variable compensation parameter based on the latent variable before quantization and the quantized latent variable, perform quantization encoding on the latent variable compensation parameter, and write a quantization encoding result into a bitstream  ⟋ 1206

Perform arithmetic coding on the quantized latent variable based on an entropy coding model, and write an arithmetic coding result into a bitstream  ⟋ 1207

FIG. 12B

FIG. 13A

Perform, based on a received bitstream, decoding by a decoder side of a context model, to obtain an entropy coding model parameter σ  / 1301

Determine, based on the entropy coding model parameter σ, an entropy coding model corresponding to the parameter σ from entropy coding models with scalable parameters, and perform arithmetic decoding on encoding information of a latent variable in the bitstream, to obtain a quantized latent variable  / 1302

Perform dequantization processing on the quantized latent variable to obtain a dequantized latent variable  / 1303

Perform decoding based on the bitstream, to obtain a latent variable compensation parameter, and compensate for the dequantized latent variable based on the latent variable compensation parameter, to obtain a compensated latent variable  / 1304

Use the compensated latent variable as an input, perform processing by using a decoding neural network, and output a decoded frequency-domain signal  / 1305

Perform post-processing on the decoded frequency-domain signal, to obtain an enhanced frequency-domain signal  / 1306

Perform IMDCT on the enhanced frequency-domain signal, and perform dewindowing processing, to obtain a final decoded audio signal  / 1307

FIG. 13B

Amplitude

1  2  3  4  5  6  7  8  9  10  11  12  13  14  15  16  Element sequence number k of the latent variable

Latent variable before quantization

Amplitude

1  2  3  4  5  6  7  8  9  10  11  12  13  14  15  16  Element sequence number k of the latent variable

Quantized latent variable

FIG. 14A

Amplitude

1  2  3  4  5  6  7  8  9  10  11  12  13  14  15  16  Element sequence number k of the latent variable

Compensated latent variable

FIG. 14B

1500

| Obtaining unit | Parameter processing unit | Encoding unit |
| --- | --- | --- |

1510      1520      1530

FIG. 15

1600

| Decoding unit | | Parameter processing unit |
| --- | --- | --- |

1610      1620

FIG. 16

1700

| Memory | Processor |
| --- | --- |

1720      1710

FIG. 17

1800

Memory 1820

Processor 1810

FIG. 18

Audio encoder 1910

Audio decoder 1920

FIG. 19

2000

Memory 2020

Processor 2010

FIG. 20

**REFERENCES CITED IN THE DESCRIPTION**

**Patent documents cited in the description**

- WO 2015175953 A1